# EUROPEAN PATENT SPECIFICATION

(11) **EP 3 150 031 B1**
(45) Date of publication and mention of the grant of the patent: **30.06.2021**
(21) Application number: 15730909.7
(22) Date of filing: 29.05.2015
(51) Int. Cl.: H05H 1/28, H05H 1/34

(54) **COOLING PLASMA CUTTING SYSTEM CONSUMABLES AND RELATED SYSTEMS AND METHODS**
KÜHLUNG VON VERBRAUCHSMATERIALIEN EINES PLASMASCHNEIDSYSTEMS UND ZUGEHÖRIGE SYSTEME UND VERFAHREN
REFROIDISSEMENT DE CONSOMMABLES DE SYSTÈME DE DÉCOUPAGE AU PLASMA ET SYSTÈMES ET PROCÉDÉS ASSOCIÉS

(30) Priority: 30.05.2014 US 201462005526 P; 30.01.2015 US 201514610135
(43) Date of publication of application: 05.04.2017
(73) Proprietor: Hypertherm, Inc., Hanover, NH 03755 (US)
(72) Inventor: ROBERTS, Jesse A., Cornish, NH 03745 (US); PATEL, Shreyansh, Lebanon, NH 03766 (US); EICKHOFF, Stephen T., Hanover, NH 03755 (US); GULLOTTA, Justin, Brownsville, VT 05037 (US); LIU, Qinghua, Etna, NH 03750 (US); BOROWY, Dennis M., Hanover, NH 03755 (US); DUAN, Zheng, Hanover, NH 03755 (US); RETNASWAMY, Ashok V., Humble, TX 77346 (US); KIM, Sung Je, Santa Clara, CA 95051 (US)
(74) Representative: Barker Brettell LLP
(86) International application number: PCT/US2015/033424
(87) International publication number: WO 2015/184420

(56) References cited:
- WO-A1-2008/101226
- US-A- 4 902 871
- US-A- 5 208 441
- US-A- 5 796 067

## Description

### TECHNICAL FIELD

This application relates generally to plasma cutting systems, and more particularly, to cooling plasma cutting system consumables and related systems and methods.

### BACKGROUND

Plasma arc cutting torches are widely used in the cutting, gouging and marking of materials. A plasma arc torch generally includes an electrode, a nozzle having a central exit orifice mounted within a torch body, electrical connections, passages for cooling, and passages for arc control fluids (e.g., plasma gas). Optionally, a swirl ring is employed to control fluid flow patterns in the plasma chamber formed between the electrode and the nozzle. In some torches, a retaining cap can be used to maintain the nozzle and/or swirl ring in the plasma arc torch. In operation, a plasma arc torch produces a plasma arc, which is a constricted jet of mostly ionized gas with high temperature and that can have sufficient momentum to assist with removal of molten metal. A plasma cutting system can include at least one plasma arc torch, a power source for supplying power to the plasma arc torch, and a gas source for supplying a gas (e.g., air) to the plasma arc torch to support various torch operations. In some designs, a compressor is used to compress the gas from the gas source and deliver the compressed gas to the plasma arc torch.

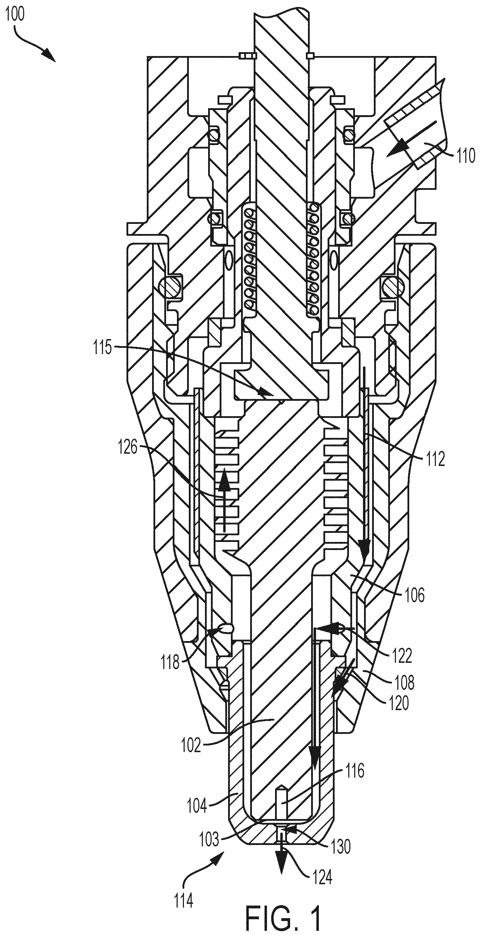

A typical plasma arc torch uses a total of about 240 standard cubic feet per hour (scfh) (6.8 m³/h) of air or higher compressed to about 65 pounds per square inch (psi) (448 kPa) or higher. This total amount of air is typically directed through various flow paths in the plasma arc torch, such as to the shield, the nozzle, the electrode, and/or to the plasma chamber. FIG. 1 shows the various paths of gas (e.g., air) distribution in a typical plasma arc torch 100, which includes an electrode 102, a plasma chamber 103, a nozzle 104, a swirl ring 106, and a retaining cap 108. The electrode 102 defines a distal end 114 configured to receive an emissive element 116 and a proximal end 115 opposite of the distal end 114. The plasma chamber 103 is defined, at least in part, by the distal end 114 of the electrode 102 and the nozzle 104, which is situated in a spaced relationship from the electrode 102. The nozzle 104 includes a nozzle exit orifice 130. The swirl ring 106 is in fluid communication with the plasma chamber 103 and has at least one radially offset or canted gas distribution hole 118. The retaining cap 108 is securely connected (e.g., threaded) to the nozzle 104. A shield (not shown) can be connected (e.g., threaded) to the retaining cap 108.

In operation, a gas is introduced into the torch 100 through a gas inlet 110 at a flow rate of about 240 scfh (6.8 m³/h) or higher, and a gas flow 112 travels toward the distal end 114 of the electrode 102 in a channel between an exterior surface of the swirl ring 106 and an interior surface of the retaining cap 108. As the gas flow 112 passes the gas distribution hole 118 of the swirl ring 106, the flow 112 is divided about equally, approximately 50% of which forms a shield flow 120 and the remaining 50% of which forms a swirl flow 122. The shield flow 120 travels at a flow rate of about 125 scfh (3.54 m³/h) or higher in a channel between an exterior surface of the nozzle 104 and an interior surface of the retaining cap 108 eventually exiting the torch 100. The shield flow 120 can cool the nozzle 104, provide stability to the plasma arc generated, and remove dross. The swirl flow 122 travels through the distribution hole 118 and continues toward the plasma chamber 103 in a channel between an exterior surface of the electrode 102 and an interior surface of the nozzle 104. As the swirl flow 122 reaches the plasma chamber 103, the swirl flow 122 divides, about 20% of which (i.e., 10% of the input gas flow 112) forms a plasma chamber flow 124 and the remaining 80% of which (i.e., 40% of the input gas flow 112) forms an electrode vent flow 126. The plasma chamber flow 124 constricts the plasma arc in the plasma chamber 103 and exits the plasma chamber 103 through the nozzle exit orifice 130 at a flow rate of about 19 scfh (0.54 m³/h) or higher. In contrast, the electrode vent flow 126 is adapted to travel in a reverse direction from the distal end 114 of the electrode 102 to its proximal end 115 at a flow rate of about 96 scfh (2.72 m³/h) or higher and exit the torch 100 through a venting port (not shown) at the proximal end 115 of the electrode 102. The electrode vent flow 126 is adapted to cool the electrode 102 as it traverses the longitudinal length of the electrode 102.

WO 2008101226 discloses an example of apparatus and method for gas cooling a plasma arc torch.

### SUMMARY

One significant shortcoming associated with conventional plasma arc torch designs (e.g., the torch 100 of FIG. 1) is that such a torch can require a gas flow rate of about 240 scfh (6.8 m³/h) or higher, due at least in part to inefficient use of incoming gas. This also means that a typical plasma arc torch requires a significant amount of compressed gas flow to stabilize the plasma arc and cool various torch components. For example, gas flow rate requirements for a typical plasma arc torch generally start at 4 cubic feet per minute (cfm) (6.8 m³/h) and can be as high as 9 cfm (15.3 m³/h).

In addition to shortcomings associated with the high flow rate of the compressed air required to operate a typical plasma arc torch, another shortcoming is the poor quality of the compressed air generated by the compressor of a plasma cutting system. In general, better cut performance is possible if the compressed air delivered to the torch is cool and dry. However, achieving this is a challenge in a plasma cutting system, especially a system with an "on-board" air compressor (i.e., an air compressor integrated in the same housing as the power supply) because such a compressor normally produces hot, humid air. To address this limitation, existing designs use one or more after-cooler coils to reduce the temperature of the compressed air, but these coils rely on weak-forced convection to operate, thus generating a low heat transfer coefficient (e.g., about 60 W/m^2-°C) that produces ineffective cooling.

Furthermore, existing plasma cutting systems have yet to be efficiently adapted for easy, portable usage, especially when the cutting systems have an on-board air compressor. For example, one design requires the air compressor to be powered by fixed input alternating-current (AC) voltage (e.g., 110 VAC or 240 VAC), which limits user options and makes the system difficult to use in field applications. Another design requires a separate power source (other than the source used to power the torch) to power the air compressor, which increases system component cost and reduces portability.

Thus, it is desirable to provide a plasma arc cutting system that has power and gas considerations for operating a plasma arc torch effectively at lower gas flow rate while maintaining about the same gas pressure, thereby enabling lower gas consumption and more efficient gas usage. Additionally, it is desirable to supply a gas to the plasma arc torch that is cool and dry, thereby allowing better torch performance. Moreover, it is desirable to provide a portable plasma cutting system that achieves the desired gas qualities described above, where the portable system can effectively integrate the power supply with the air compressor without introducing inconvenient limitations, such as adding bulky and/or costly components or requiring fixed input voltages.

The invention includes an electrode for a plasma cutting system, the electrode comprising: an arc portion shaped to matingly engage a nozzle of the plasma cutting system, the arc portion having a first end comprising a plasma arc emitter disposed at a distal end thereof; and a thermal portion in thermal communication with a second end of the arc portion, the thermal portion shaped to slidingly engage a complementary swirl ring of the plasma cutting system and including: (i) a first circumferentially formed disk-shaped flange mating feature extending radially from a proximal end of the thermal portion of the electrode, the first circumferentially formed disk shaped flange mating feature defining a first radial width to interface with the swirl ring said first disk-shaped flange mating feature including a sealing member configured to form a dynamic seal with the swirl ring so to limit a flow of a gas from a forward side to a rearward side of said first disk-shaped flange mating feature, (ii) a second circumferentially formed disk-shaped flange mating feature extending radially from a distal end of the thermal portion of the electrode to define a second radial width (w2) to interface with the swirl ring, and (iii) a thermal exchange surface region defined by a generally cylindrical portion of the thermal portion between the first disk-shaped flange mating feature and the second disk-shaped flange mating feature, the thermal exchange surface region defining a set of annular flanges extending from the thermal portion between the first circumferentially formed disk-shaped flange mating feature and the second circumferentially formed disk-shaped flange mating feature, the set of annular flanges having a radial width (w3) less than at least one of the first radial width and the second radial width.

The invention also includes a method of cooling an electrode of a plasma cutting system as described above, the method comprising: positioning at least a portion of the electrode translatably within a complementary swirl ring of the plasma cutting system; forming an enclosed electrode cooling cavity between the first flange mating feature of the electrode, the second flange mating feature of the electrode, the thermal exchange surface region of the electrode, and an internal surface of the swirl ring, the thermal exchange surface region being between the first flange mating feature and the second flange mating feature and defining a set of radially-extending annular flanges; providing a gas flow to the plasma cutting system; directing the gas flow to a proximal region of the swirl ring; directing the gas flow from an external surface at the proximal region of the swirl ring into the enclosed electrode cooling cavity through a set of inlet flow passages formed around the proximal region of the swirl ring; circulating the gas flow along the thermal exchange surface region in the enclosed electrode cooling cavity; expelling substantially all of the gas flow from the enclosed electrode cooling cavity to the external surface of the swirl ring through a set of outlet flow passages formed around the proximal region of the swirl ring; and directing the gas flow into a plenum region defined between the electrode and a complementary nozzle.

The invention further includes a swirl ring complementary to the electrode described above comprising: a distal section shaped to receive a forward portion of the corresponding plasma arc electrode, the distal section including a set of fluid flow passages fluidly connecting an internal surface of the swirl ring with an external surface of the swirl ring, the set of fluid flow passages shaped to impart a swirling flow path on a gas flow passing there through while conducting the gas flow radially inward from the external surface to the internal surface of the swirl wring; and a proximal section shaped to matingly engage a rear portion of the electrode (202), the proximal section including: a first portion defining a set of inlet flow passages that provide the gas flow radially inward from the external surface of the swirl ring to the internal surface of the swirl ring; and a second portion disposed between the first portion and the distal section defining a set of outlet flow passages that provide the gas flow radially outward from the internal surface of the swirl ring to the external surface of the swirl ring.

The invention further includes a plasma cutting torch tip comprising: a swirl ring as described above; and an electrode as described above, at least a portion of which being disposed within the swirl ring.

Systems and methods described herein can achieve efficient use of air within a plasma cutting system (e.g., lower gas flow rate while maintaining similar gas pressure) by preventing unnecessary gas leaks in a plasma arc torch. For example, the torch can include one or more strategically positioned sealing devices (e.g., o-rings) to eliminate gas leaks through its rear end, which can increase plasma chamber pressure by about 6 psi (41.4 kPa) at nominal environmental conditions. This design also increases the robustness of the electrode - swirl ring interface to reduce physical damages and particle contamination, which in turn increases optimal performance pressure range for the plasma cutting system. Such an improvement allows the torch to perform over wider environmental conditions and improves compressor performance.

Additionally, the disclosure provides systems and methods for improving the quality of the compressed air generated by the compressor. In one exemplary implementation of an integrated compressor-power supply design, an after-cooler tube for transporting the compressor air to the torch is located in the same housing as the compressor and power supply electronics. The after-cooler tube can be positioned directly in the blast of a cooling fan typically used to cool power supply electronics, thereby producing a high heat transfer coefficient (h) of about 112 W/m^2-°C. This design choice allows a reduced package size and more effective cooling than can be otherwise achieved in the same size package.

Moreover, the disclosure provides an integrated compressor-power supply design that is portable and easy to use, especially conducive to field applications. In some embodiments, an auxiliary direct-current (DC)-to-DC converter is used to power the integrated air compressor, where the DC-DC converter can draw DC power from existing torch power supply and produce an appropriate amount of DC voltage to power the air compressor. One major benefit of this design is that it provides a highly portable plasma cutting system with universal input AC voltage while minimizing the design change needed for the existing torch power supply, thus reducing design alteration cost.

Disclosed is a plasma cutting system. The system includes a power source configured to generate a plasma arc and a plasma arc torch connected to the power source for delivering the plasma arc to a workpiece. The plasma arc torch defines a multi-function fluid flow path for sustaining the plasma arc and cooling the plasma arc torch such that the plasma cutting system has a power-to-gas flow ratio of at least 2 kilowatts per cubic feet per minute (kW/cfm) (1.18 kW/m³/h). The power-to-gas flow ratio comprises a ratio of power of the generated plasma arc to a total gas flow supplied to the plasma arc torch. The plasma arc torch may be a blowback torch.

The disclosed plasma cutting system may further comprise a compressor operably connected to the power source and configured to supply a plasma gas to the plasma arc torch at a rate of less than about 80 standard cubic feet per hour (scfh) (2.27 m³/h). A direct-current-to-direct-current (DC-DC) converter can be operably connected between an output of the power source and an input of the compressor. The compressor can be integrated with the power source.

The disclosed plasma cutting system may further comprise a circumferential seal formed between an electrode and a swirl ring of the plasma arc torch to prevent the plasma gas from traveling in a reverse flow direction toward a proximal end of the torch away from the workpiece. The circumferential seal can be dynamic. The plasma arc torch may be configured to substantial inhibit rearward venting of the plasma gas in the plasma arc torch.

Disclosed is a plasma cutting system. The system includes a power supply and a compressor. The power supply is disposed within a housing and configured to deliver a current of greater than about 25 amperes to a torch head for generating a plasma arc. The torch head comprises a distal end for receiving an emissive element and a proximal end. The compressor is disposed within the housing and operably connected to the power supply and configured to supply a plasma gas to the torch head. The torch head is configured to direct a flow of the plasma gas through a flow path in the torch head at a rate of not more than about 80 standard cubic feet per hour (scfh) (2.27 m³/h). In addition, the torch head defines the flow path for providing a multi-function fluid flow of plasma gas toward the distal end, where the torch head is configured to at least substantially prevent a reverse flow of the plasma gas toward the proximal end.

The system may further include a direct-current-to-direct-current (DC-DC) converter operably connected between an output of the power supply and an input of the compressor. The compressor can be integrated with the power supply, such as an internal component of the power supply. The power supply can include a boost converter that provides a constant input voltage to the DC-DC converter regardless of the input voltage to the power supply.

The torch head may comprise an electrode, a swirl ring, a nozzle, a retaining cap, and a first circumferential seal formed between the electrode and the swirl ring to dynamically engage an external surface of the electrode to an internal surface of the swirl ring. The first circumferential seal at least substantially prevents the reverse flow of the plasma gas toward the proximal end of the torch head away from the workpiece. In addition, the torch head can include a second circumferential seal formed between the swirl ring and the retaining cap to engage an external surface of the swirl ring to an internal surface of the the retaining cap.

The multi-function fluid flow may comprise: i) an electrode cooling flow portion between an external surface of the electrode and an internal surface of the swirl ring to cool the electrode; ii) a retaining cap flow portion between an external surface of the swirl ring and an internal surface of the retaining cap; and iii) a plasma chamber flow portion between an external surface of the electrode and an internal surface of the nozzle and in fluid connection with a plasma chamber of the torch head to constrict the plasma arc. The flow rate of the plasma chamber flow portion of the multi-functional fluid flow can be about 20 schf (0.57 m³/h). In some embodiments, the multi-function fluid flow further comprises a vent flow portion from an internal surface of the nozzle to an external surface of the nozzle to stabilize the plasma arc and cool the nozzle.

A power-to-gas flow ratio of the plasma cutting system, which comprises a ratio of plasma cutting power generated by the power supply to a total flow of the plasma gas supplied by the compressor to the torch head, may be greater than about 2 kilowatts per cubic feet per minute (kW/cfm) (1.18 kW/m3/h).

The flow rate of the plasma gas supplied by the compressor to the torch head may be about 65 scfh (1.84 m³/h).

Disclosed is a plasma cutting system. The system comprises a power generation means for generating a plasma arc and a delivery means for delivering the plasma arc to a workpiece. The delivery means defines a multi-function fluid flow path for sustaining the plasma arc and cooling the delivery means such that the plasma cutting system has a power-to-gas flow ratio of at least 2 kilowatts per cubic feet per minute (kW/cfm) (1.18 kW/m3/h). The power-to-gas flow ratio comprises a ratio of power of the plasma arc to a total gas flow supplied to the delivery means.

In other examples, any of the above can include one or more of the following features. The plasma cutting system may further comprise a thermal regulation system including a fan for generating a flow of cooled air, a heat sink located downstream from the fan, and an output tube. The heat sink is connected to a set of electronics in the power source/power supply. The output tube is connected to the compressor and disposed in the power source/power supply for conducting the plasma gas from the compressor to the plasma arc torch. Additionally, the output tube is located substantially between the fan and the heat sink such that the output tube is substantially exposed to the flow of cooled air from the fan.

The plasma cutting system may further include a set of baffles configured to direct the flow of cooled air from the fan to the output tube. The plasma cutting system may further comprise a water separator connected to the output tube. The fan may be configured to cool both the heat sink and the plasma gas in the output tube. The output tube may comprise a coil. The coil diameter can be approximately the same as or less than an annular flow area of the fan such that the output tube is substantially immersed in the flow of cooled air. At least one of the diameter of the output tube or the length of the output tube can be dimensioned such that the heat transfer rate from the plasma gas within the output tube to the internal surface of the output tube is approximately the same as the heat transfer rate from the exterior surface of the output tube to the ambient air.

The power source/power supply may operate at a current of less than about 50 amperes. The plasma cutting system may weigh no more than about 30 pounds (13.6 kg). The plasma cutting system may have a volume of about 1640 inch³ (26.9 dm³).

Unless otherwise noted or stated herein, the various aspects of the systems and methods described herein, and their related embodiments, can be implemented in any of various different possible combinations with one another.

It should also be understood that various aspects and embodiments of the invention can be combined in various ways. Based on the teachings of this specification, a person of ordinary skill in the art can readily determine how to combine these various embodiments. For example, in some embodiments, any of the aspects above can include one or more of the above features. One embodiment of the invention can provide all of the above features and advantages.

### BRIEF DESCRIPTION OF THE DRAWINGS

The advantages of the invention described above, together with further advantages, may be better understood by referring to the following description taken in conjunction with the accompanying drawings. The drawings are not necessarily to scale, emphasis instead generally being placed upon illustrating the principles of the invention.
FIG. 1 shows a prior art plasma arc torch with various gas distribution flow paths therethrough.
FIG. 2 shows an exemplary plasma arc torch that defines multi-function fluid flow paths therethrough.
FIG. 3 shows a detailed view of gas flow through the swirl ring of FIG. 2.
FIG. 4 shows a detailed view of the electrode-swirl ring interface of FIG. 2.
FIG. 5 shows another exemplary plasma arc torch that defines multi-function fluid flow paths therethrough.
FIGS. 6A-C show various views of an exemplary enclosure with an on-board air compressor.
FIG. 7 shows an exemplary design of a plasma-cutting system power supply assembly.
FIG. 8 is an isometric view of an exemplary plasma arc electrode having a thermal exchange region to receive a cooling flow.
FIG. 9 is a side view of the electrode of FIG. 8 illustrating a series of flanges along the thermal exchange region.
FIG. 10 is an isometric view of an exemplary plasma arc electrode having a thermal exchange region to receive a cooling flow and a sealing device arranged at its proximal end.

### DETAILED DESCRIPTION

Power supplies described herein may be designed and manufactured to operate efficiently at low operational cost while also being affordable to purchase and maintain. Additionally, power supplies described herein can maintain a desired operational temperature while reducing (e.g., minimizing) power supply size and promoting a simplified component layout. Additionally, power supplies described herein can operate in a wide variety of environments at reasonable operational temperatures while minimizing the exposure of internal components to moisture and other environmental contaminants.

The systems and methods described herein may provide a material processing power supply unit (e.g., a plasma arc torch power supply) that is light weight and requires reduced gas flow and/or cooling flow relative to other systems (e.g., other systems with comparable power outputs). The power supplies described herein can be a small, more compact design.

The advantageous capabilities described herein can be achieved using modifications to the torch cooling subsystem, the power supply cooling subsystem, each alone or in combination with one another. For example, as discussed below, a torch cooling subsystem can include a fewer number of torch consumables (i.e., consumables requiring less compressed air flow) to achieve a higher power to cooling gas flow ratios. Additionally or alternatively, power supply cooling subsystems can include various features, such as electronic circuitry configurations to power an air compressor using a wide range of (e.g., universal) power inputs. Additionally or alternatively, in some cases, compressed air delivered to the torch can be cooled within the power supply by arranging tubing carrying the compressed air within a path or (e.g., directly within an exhaust path of) a power supply cooling fan rather than requiring multiple fan devices.

In general, plasma cutting systems can include any of the various features or components described herein, either alone or in combination with one another, to achieve one or more advantageous results described herein.

### Reduced Gas Flow

In one aspect, the systems and methods described herein provide plasma arc torches that direct and use compressed gas in a more efficient manner to help limit gas flow losses and to reduce the amount of compressed gas needed to operate the torches, such as using limited (e.g., no) vent flow and reduced (e.g., minimal) shield gas flow. Additionally, in some embodiments, most or all of the gas flow in a torch can be directed axially towards the torch tip to help reduce losses.

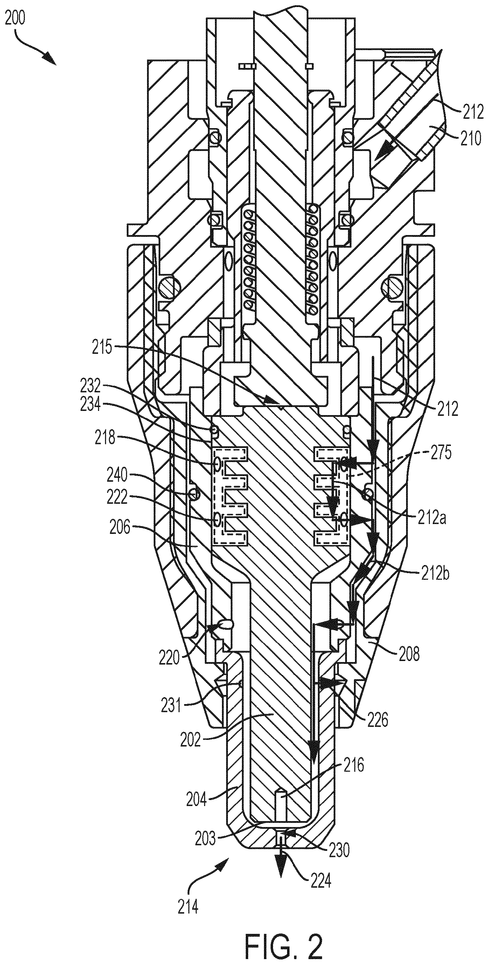

For example, FIG. 2 shows an exemplary plasma arc torch that defines multi-function fluid flow paths therethrough to achieve a reduced flow design. The plasma arc torch 200 of FIG. 2 can be a contact start, blowback torch configured to operate at 50 amps or less and/or greater than 25 amperes (e.g., 30 amps) at an input compressed gas flow rate of about less than about 80 scfh (2.27 m³/h) (e.g., 65 scfh) (1.84 m³/h). As shown, the plasma arc torch 200 includes an electrode 202, a plasma chamber 203, a nozzle 204, a complementary swirl ring 206, and a retaining cap 208.

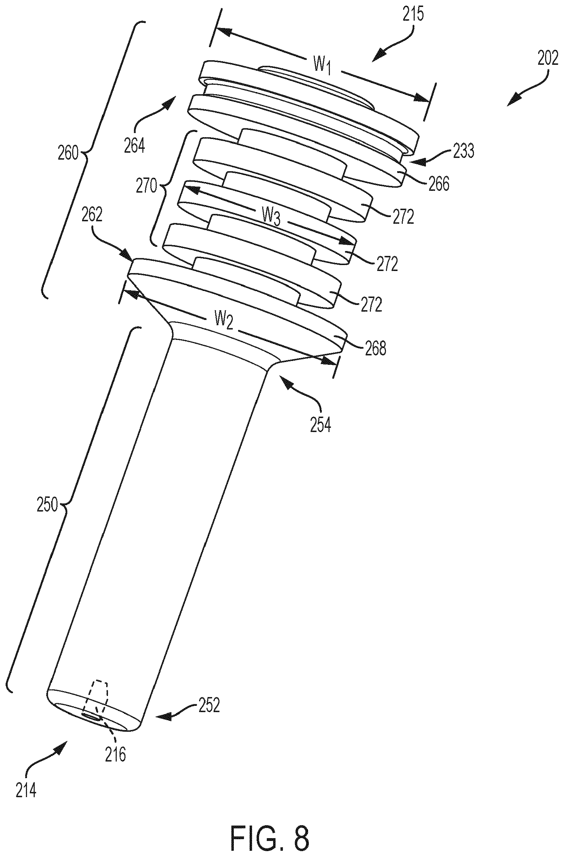

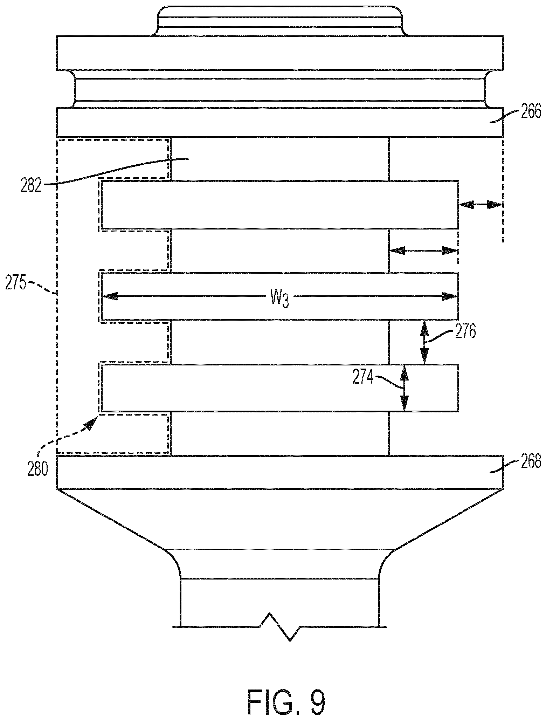

Referring to FIGS. 2-5 and 8-9, the electrode 202 is formed of a thermally conductive body having a distal end 214 and a proximal end 215 opposite the distal end 214. The electrode 202 generally includes a front portion (e.g., an arc portion or distal portion) 250 and a rear portion (e.g., a thermal portion or proximal portion) 260. The front portion 250 is sized and shaped to matingly engage (e.g., be received within) the nozzle 204 of the plasma cutting system and has a first end 252, which can be at or near the distal end 214, configured to receive an emissive element (e.g., a plasma arc emitter) 216. The front portion 250 has a second end 254 connected to, and in thermal communication with, the rear portion 260.

The electrode 202 is designed and configured to be generally free to translate (e.g., slide within or along) adjacent torch components, such as a swirl ring. In some cases, the blowback style electrode can be substantially free of features or elements, such as threaded connections, that couple (e.g., affix) the electrode to an adjacent torch component that could otherwise cause the electrode to be permanently fixed to the torch body after installation. For example, during use (e.g., during plasma arc ignition) a gas flow can be introduced to a region of the electrode to drive the electrode away from the nozzle 204 to create a gap between the nozzle and the electrode through which a plasma arc can be formed. So that the electrode can move (e.g., slide, translate, matingly engage, etc.) relative to an adjacent component, such as a swirl ring, it can therefore be useful and advantageous (e.g., or even necessary in some cases) that the electrode be free of axial positioning elements, such as threaded connections. However, as discussed below, the electrodes described herein include one or more sealing devices that form a fluid seal between the electrode and the swirl ring that is a dynamic seal. In some embodiments, the fluid seal permits the electrode to axially move (translate) a relatively small amount (e.g., about 0.025 inches (0.635 mm) to about 0.100 inches (2.54 mm) (e.g., about 0.035 inches) (0.89 mm). Such permitted translation can be useful for blowback style electrodes that move into and out of contact with the nozzle during ignition.

The rear portion 260 is sized and configured to interface with (e.g., slidingly engage with) the swirl ring 206. The rear portion 260 has a forward end (e.g., a distal end) 262 and a rear end (e.g., a proximal end) 264 that are adapted to mate with the swirl ring 206.

The rear portion 260 includes at least one mating feature, such as a first feature (e.g., a circumferentially formed disk-shaped flange mating feature (e.g., an annular flange)) 266 that extends outwardly (e.g., radially) from the proximal end 264 of the rear portion 260. In some cases, the first feature 266 can be annularly formed flanges formed generally uniformly (e.g., continuously) around the rear portion 260. The first feature 266 can be solid structures (e.g., substantially free of fluid passages therethrough) to serve as a fluid barrier to help contain a gas flow. The first feature 266 defines a width (e.g., a radial width (e.g., a diameter)) W₁ adapted to interface with the swirl ring 206.

The rear portion 260 also includes a second feature (e.g., a circumferentially formed disk-shaped flange mating feature (e.g., an annular flange)) 268 that extends outwardly (e.g., radially) from the distal end 262 of the rear portion 260. The second feature 268 can also define a width (e.g., a radial width (e.g., a diameter) W₂ adapted to interface with the swirl ring 206). In some embodiments, the radial width W₁ can be approximately the same as the radial width W₂. In some embodiments, the width W₁ and/or the width W₂ can be about 0.4 inches (10.2 mm) to about 0.5 inches (12.7 mm) (e.g., about 0.44 inches (11.18 mm) to about 0.45 inches (11.43 mm) (e.g., 0.449 inches (11.4 mm) to about 0.4497 inches (11.42 mm))). However, in some embodiments, the radial width W₁ of the first feature 266 is greater than the radial width W₂ of the second feature 268. For example, the radial width W₁ may be larger than the radial width W₂ so that the first feature 266 has a tighter fit with the swirl ring 206 than the second feature 268.

In some cases, the first feature 266 can define a positioning surface (e.g., a bearing surface) that is configured to slidingly interface with the swirl ring 206. For example, the positioning surface can be defined around an outer circumferential surface of the first feature 266. The bearing surface can be configured to provide a tight fit between the electrode 202 and the swirl ring 206. In some examples, the first feature 266 (e.g., and the bearing surface thereon) can be configured to slidingly engage and seal with a sealing device (e.g., an o-ring) of the swirl ring, as discussed below.

The first feature 266 and the second feature 268 can be separated by an axial length such that a ratio of the radial width W₁ to the axial length between the first feature 266 and the second feature 268 is less than about 1.32 to about 1.44 (e.g., about 1.38). That is, in some embodiments, the rear portion 260 (e.g., via the first feature 266 and the second feature 268) can define a generally cylindrical engagement surface area to be received by the adjacent swirl ring.

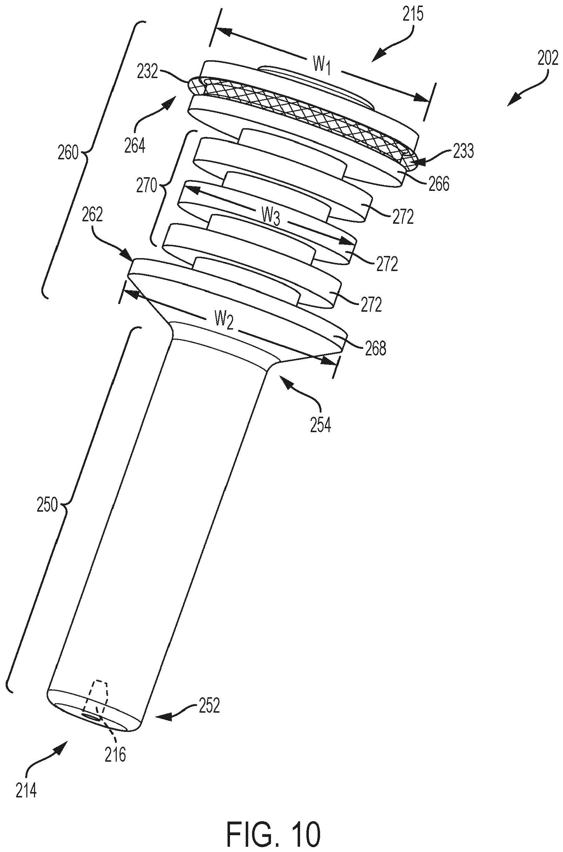

At least the first feature 266 includes a sealing surface configured to form a dynamic seal with the swirl ring. The sealing surface limits a flow of a gas from a forward side of the disk-shaped feature to a rearward side of the annular mating feature. The sealing surface comprises a sealing device (e.g., an o-ring type sealing member) 232. In some embodiments, the disk-shaped feature can define a recess (e.g., an annularly formed recess) 233 along its outer circumferential surface to receive the o-ring 232. For example, the electrode 202 illustrated in FIG. 10 is shown with the accompanying o-ring device 232 disposed within the complementary recess 233. In some examples, the sealing surface can include a face seal or a coating (e.g., a sealing material coating, such as Teflon) that is configured to slidingly engage the swirl ring. However, in some embodiments, the electrode may not include a sealing device along the first feature 266 or the second feature 268.

The rear portion 260 includes a region (e.g., a thermal exchange or transfer surface region (e.g., a convective heat exchange surface)) 270 defined by a generally cylindrical portion between the first feature 266 and the second feature 268. The thermal exchange surface region 270 has a width (e.g., a radial width (e.g., diameter)) W₃ that is less than the radial width W₁ of the first feature 266 and/or the radial width W₂ of the second feature 268. In some cases the average width along the thermal exchange surface region is less than the radial width W₁ and/or the radial width W₂.

As discussed herein, the electrode can be installed (e.g., physically mated) with the complementary swirl ring such that the first feature 266 or the second feature 268 can slidingly engage the swirl ring. When installed within the swirl ring, the electrode, for example, by the first feature 266, second feature 268, and/or the thermal exchange surface region 270 can define a cavity (e.g., an enclosed volume or a cooling cavity) 275 between the electrode and swirl ring through which gas (e.g., a cooling gas flow) can flow to cool the rear portion of the electrode. As described below, in an installed configuration, the enclosed cooling cavity 275 can receive a gas flow from a gas inlet (e.g., one or more holes) of the swirl ring and expel the gas flow (e.g., after the gas flow has passed along and cooled the thermal exchange surface region) through an outlet (e.g., one or more holes) of the swirl ring. As discussed herein, the cavity 275 can be formed in part by forming a dynamic seal between the first feature 266 of the electrode and the interior surface of the swirl ring.

The thermal exchange surface region 270 can be used to cool other portions of the electrode. In some embodiments, the electrode forms a thermally conductive path between the thermal exchange surface region 270 and the plasma arc emitter 216 of the front portion 250. For example, as discussed below, a gas flow passing between the first feature 266 and the second feature 268 can convectively cool the thermal exchange surface region 270 and/as the rear portion 260 conductively cools the front portion 250 (e.g., via the thermally conductive path).

The thermal exchange surface region 270 includes a generally cylindrical portion (e.g., a substantially uniform cylinder) formed between the first feature 266 and the second feature 268. The thermal exchange surface region 270 includes one or more flanges (e.g., a disk-shaped flange (e.g., a round disk-shaped flange)) 272 extending from an inner cylindrical portion 282. As mentioned above, the width W₃ of one or more of the flanges 272 is less than the radial width W₁ of the first feature 266 and/or the radial width W₂ of the second feature 268. The set of flanges can include at least two physically distinct (e.g., separated) flanges. In some examples, one or more of the flanges can define a sharp edge (e.g., square or about 90 degree corner) around an outer corner 280. In some cases, the sharp edge corner 280 can help promote cooling of the flange, for example, by increasing thermal energy transfer or helping to perturb gas flow passing through the cooling cavity 275 to create turbulent flow within the cavity.

The set of flanges can include any number of flanges disposed along the thermal exchange surface region 270. For example, the set of flanges can include one to ten or more flanges. In some embodiments, the set of flanges can include about three flanges, which can be arranged substantially equally spaced from one another. In some cases, the flanges can all be equally sized to have a common width W₃ and thickness 274. Constructing the set of flanges to have substantially the same size and spacing can help to promote equal cooling of the rear portion 260.

The set of flanges 272 can define a set of longitudinal and/or axial flow passages within the cooling cavity 275, such as in a spacing 277 between an internal surface of the complementary swirl ring (e.g., or the outer surface of the first feature 266) and the set of thermal flanges.

In some examples, the width W₃ can be about 50% to about 85% (e.g., about 81% of the radial width W₁. In some embodiments, the width W₃ is about 0.225 inches (5.71 mm) to about 0.38 inches (9.65 mm) (e.g., about 0.36 inches (9.14 mm)).

The set of flanges are typically sized and configured to promote airflow along the thermal exchange surface region 270 (e.g., to promote convective cooling along the flanges) while balancing the flanges' capability to promote conductive cooling therethrough. That is, the flanges typically have a diameter that is sufficiently large to provide a surface area along which gas can flow and a spacing 276 between adjacent flanges so that gas can pass therethrough (e.g., to serve as a cooling fin). Sizing to promote convective cooling can be balanced with design of the individual flanges to promote conductive cooling. For example, the flanges can have a thickness that is large enough to promote desired conductive cooling radially through the flanges to help cool other regions of the electrode. In some cases, at least one flange 272 can have a thickness (e.g., an axial thickness) 274 that is about 5% to about 25% (e.g., about 15%) of an axial length of the thermal exchange surface region 270. In some cases, the axial thickness 274 can be about 0.01 inches (0.25 mm) to about 0.083 inches (2.1 mm) (e.g., about 0.047 inches (1.19 mm)).

The flanges can be separated by a spacing (e.g., an axial spacing) 276 that is large enough to provide a region through which gas flow can pass, for example, to help convectively cool the flanges. In some examples, at least two flanges (e.g., in some cases, one of the two flanges can be the first feature 266 or the second feature 268) can be separated by a spacing 276 that is about 5% to about 25% of an axial length of the thermal exchange surface region 270. In some cases, the spacing 276 is about 0.01 inches (0.25 mm) to about 0.083 inches (2.1 mm) (e.g., about 0.046 inches (1.17 mm)).

While the electrode has been generally described as having two features that define a cooling cavity (e.g., the first feature 266 and the second feature 268), other examples are possible. For example, the electrode can include three or more disk-shaped features that help to define two or more cooling cavities. As discussed below, multiple cooling cavities can be used with multiple sets of coolant passages along the swirl ring to circulate gas flow along multiple regions of the electrode.

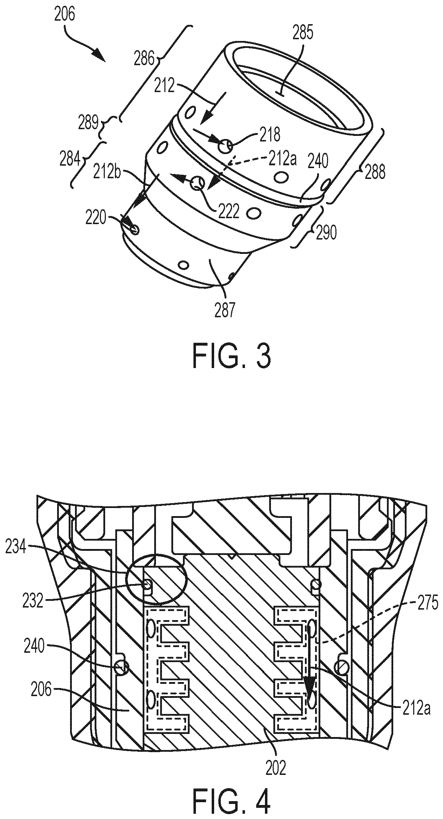

Referring to FIGS. 2-5 (FIG. 3 in particular), the swirl ring 206 includes a distal section (e.g., forward section) 284 and a proximal section (e.g., rearward section) 286. A transition section (transition region) 289 can be formed between the distal section 286 and the proximal section 284, which can include a taper, step, or flange transition that varies in diameter along its length. The transition section 289 can adjoin a first width defined by the proximal section 286 to a second width defined by the distal section 284. In some cases, the first width (e.g., the width of the proximal section) is greater than the second width (e.g., the width of the distal section). An internal portion of the swirl ring (e.g., the proximal section 286) is shaped and configured to matingly engage (e.g. slidingly interface, radially couple) a mating feature of the electrode, such as the rear portion 260. In some cases, the portion of the internal surface of the swirl ring is configured to slidingly interface with a sealing member of the electrode, such as the sealing surface of the first feature 266. While the systems generally illustrated include a sealing device (e.g., o-ring) 232 on the first feature 266 of the electrode that engages with a smooth sealing surface of the swirl ring, other configurations are possible. For example, in some cases, the first feature 266 can include a smooth sealing surface and the sealing device (e.g., an o-ring) can be disposed within an internal surface of the swirl ring (e.g., along the proximal section). In some cases, the swirl ring can define a recess along its internal surface that positions the o-ring.

The swirl ring includes a series of two or more sets of fluid flow passages formed radially through the swirl ring so that gas can flow into and out of the swirl ring, for example, to flow along and cool the electrode and/or to serve as a swirling plasma gas flow. The two or more sets of fluid flow passages are formed in proximal section 284. In some cases, as illustrated in FIG. 3 and discussed below, the swirl ring can have three sets of fluid passages that direct flow into, out of, and back into the swirl ring to cool the electrode and to stabilize the plasma arc, as discussed in greater detail below.

The proximal section 286 includes a first portion (e.g., an inlet portion) 288 and a second portion (e.g., an outlet portion) 290.

The first portion 288 includes a set of proximal holes (e.g., inlet flow passages (e.g., gas flow holes)) 218 that provide a gas flow from the external surface 287 of the swirl ring to the internal surface 285.The inlet passages 218 can be distributed circumferentially around the swirl ring to provide the gas flow to the internal surface 285 of the swirl ring. The inlet passages 218 can be formed radially (e.g., transverse relative to the external surface) or canted (e.g., angled with respect to a radial axis) to help impart a swirling flow. As discussed herein, the swirl ring and a matingly engaged electrode can together define a cooling cavity 275, and the inlet passages 218 can introduce a gas flow from outside the swirl ring into the cooling cavity.

The second portion 290 of the proximal section 286 is arranged (e.g., disposed or otherwise positioned) between the first portion 288 of the proximal section 286 and the distal section 284. The second portion 290 includes a set of outlet flow passages (e.g., middle holes) 222 distributed circumferentially around the swirl ring that provide the gas flow from the internal surface 285 of the swirl ring (e.g., from the cooling cavity 275 defined between the electrode and the swirl ring) to the external surface 287 of the swirl ring. The outlet passages 222 can be formed radially (e.g., transverse relative to the external surface) or canted to help impart a swirling flow.

The swirl ring can include a flow diversion element (e.g., flow obstruction) 240 disposed along the external surface of the proximal section 286 of the swirl ring between the first portion 288 and the second portion 290 (e.g., between the inlet passages 218 and the outlet passages 222). The flow diversion element 240 can help limit (e.g., inhibit or prevent) gas flow from passing along the external surface of the swirl ring (e.g., between the swirl ring and an adjacent retaining cap 208) beyond the first portion. That is, the flow diversion element 240 can block gas from flowing towards the torch tip and direct the gas flow into the inlet passages 218. The flow diversion element 240 can be a circumferential sealing surface or feature of the swirl ring or a sealing device coupled to the external surface of the swirl ring. For example the flow diversion element 240 can include an o-ring type sealing device. In some cases, the swirl ring can define an annular recess around its external surface that is configured to receive the o-ring 240. In some examples, the flow diversion element 240 can be a feature (e.g., a flange feature) extending from the external surface that defines a sealing surface that engages with the adjacent retaining cap 208.

The holes in the proximal section (e.g., the inlet passages 218 and the outlet passages 222) can be any of various sizes to provide gas flow through the swirl ring. For example, one or more of the inlet passages (e.g., all of the inlet passages) 218 can have a diameter that is about 0.030 inches (0.76 mm) to about 0.060 inches (1.52 mm) (e.g., about 0.052 pinches (1.32 mm). In some cases, the inlet passages can be substantially evenly distributed around the swirl ring (e.g., circumferentially about a longitudinal axis of the swirl ring). Similarly, one or more of the outlet passages (e.g., all of the outlet passages) 222 can have a diameter that is about 0.030 inches (0.76 mm) to about 0.060 inches (1.52 mm) (e.g., about 0.052 inches (1.32 mm)).

The outlet passages can be substantially evenly distributed around the swirl ring (e.g., circumferentially about a longitudinal axis of the swirl ring). In some examples, the inlet passages 218 and the outlet passages 222 can be designed to have the same sizing and/or distribution or can be arranged in different patterns. For example, as depicted in the example of FIG. 3, the set of inlet passages 218 and the set of outlet passages 222 can be circumferentially aligned with one another about a longitudinal axis of the swirl ring. However, in some embodiments, at least some of the inlet passages and outlet passages (e.g., the set of inlet passages and the set of outlet passages) can be circumferentially offset from one another about the longitudinal axis of the swirl ring. In some cases, the outlet passages can be disposed substantially in between adjacent inlet passages.

The axial distance between the inlet passages and the outlet passages can vary. In some embodiments, the inlet passages and the outlet passages can be axially separated by about 0.100 inches to about 0.200 inches (e.g., about 0.183 inches).

While the proximal section 286 has been described generally as including one set of inlet passages and one set of outlet passages that help circulate gas flow into and out of the cavity, other configurations are possible. In some embodiments, the swirl ring can include two or more sets of inlet passages and two or more sets of outlets passages. For example, the swirl ring can have alternating sets of inlet and outlet passages that provide multiple flow paths into and out of the swirl ring. Similarly, the swirl ring can include multiple flow diversion elements to help direct gas flow into and out of the various flow passages.

The distal section 284 is shaped to accommodate (e.g., receive) a neck portion of a corresponding plasma arc electrode (e.g., the front portion 250 of electrode 202). One or more swirling fluid flow passages (e.g., distal holes) 220 are disposed around (e.g., distributed circumferentially around) the distal section that fluidly connect an internal surface 285 of the swirl ring with an external surface 287 of the swirl ring. The swirling fluid flow passages 220 help to impart a swirling flow path on gas passing therethrough. For example, the swirling fluid flow passages 220 can be canted (e.g., defined angularly with respect to the external surface 287) to direct the flow therethrough in a swirling (e.g., helical) path around the electrode.

The plasma chamber 203 is defined, at least in part, by the distal end 214 of the electrode 202 and the nozzle 204, which is situated in a spaced relationship from the electrode 202. The nozzle 204 includes a nozzle exit orifice 230 and a nozzle vent hole 231. The swirl ring 206 is in fluid communication with the plasma chamber 203 and has three sets of one or more radially offset or canted gas distribution holes, A shield (not shown) can be connected (e.g., threaded) to the retaining cap 208.

Referring to FIGS. 2-5, a gas supply can provide gas flow (e.g., cooling gas and/or plasma gas) to the torch 200, for example, during use (e.g., contact ignition or cutting). As a gas is introduced into the torch 200 through a gas inlet 210 at a flow rate of less than 80 scfh (2.27 m³/h) (e.g., about 65 scfh (1.84 m³/h)), the gas flow 212 travels toward the distal end 214 of the electrode 202 in a channel between an exterior surface of the swirl ring 206 and an interior surface of the retaining cap 208. The gas flow 212 is then directed to the proximal end of the swirl ring 206 through the set of inlet passages 218 and into the cavity 275 defined by the electrode and the swirl ring to cool the rear portion 260of the electrode 202. As discussed above, the flow diversion element (e.g., an o-ring sealing device) 240 can obstruct the distally flowing gas and direct it through the inlet passages 218 and into the cavity 275. This segment of the gas flow 212 is referred to as an electrode cooling flow 212a. As depicted, the electrode cooling flow 212a travels distally between an external surface of the electrode 202 (e.g., along the thermal exchange surface region 270) and an inner surface of the swirl ring 206 to further cool the electrode 202. The gas flow can be circulated along the surface defined by the generally cylindrical portion of the electrode between the first feature 266 and the second feature 268 (e.g., along the thermal exchange surface region (e.g., along the flanges or cylindrical section) 270). In some embodiments, the gas flow can be circulated along the set of one or more thermal flanges 272 between the first feature 266 and the second feature 268. As discussed above, a sealing interface between the electrode and the swirl ring (e.g., formed in part by the sealing surface (e.g., the sealing device 232 of the first feature 266 or the second feature 268) can help inhibit the gas flow from flowing to a rearward side of the first feature 266 (e.g., towards the torch body).

In some embodiments, the circulating coolant flow within the cavity convectively cools the surface defined between the first feature 266 and the second feature 268. Convectively cooling the surface defined between the first feature 266 and the second feature 268 can help the electrode conductively cool the end of the electrode having an emissive insert 216, for example, via a thermally conductive path through the electrode.

The electrode cooling flow 212a then exits (e.g., is expelled from) the swirl ring 206 and the cooling cavity 275 through the set of outlet passages 222. In some cases, substantially all of the gas flow can be expelled from the enclosed cooling cavity 275 through the outlet holes 222. The gas flow 212 continues to flow distally between an outer surface of the swirl ring 206 and an inner surface of the retaining cap 208. This segment of the gas flow 212 is referred to as a retaining cap flow 212b. The retaining cap flow 212b is then directed back into the swirl ring 206 through the distal holes 220 to be used as a plasma gas flow (e.g., with a swirling flow path imparted by the distal holes 220). For example, FIG. 3 illustrates a detailed view of the gas flow 212 through the swirl ring 206, where the gas flow 212 enters the swirl ring 206 through the inlet passages 218, circulates throughout the cooling cavity 275, exits the swirl ring 206 through the outlet passages 222, and re-enters the swirl ring 206 again through the distal holes 220.

As discussed above, the swirl ring has two or more sets of inlet passages and outlet passages. Thus, in some embodiments, prior to entering the swirl ring through the distal holes 220, the gas flow can be directed into the swirl through a second set of inlet passages and then expelled through the swirl ring from a second set of outlet passages. This configuration of multiple inlet and outlet passages can be useful to increase gas flow circulation or to provide the gas flow to and from a second cooling cavity defined along the electrode.

With reference to FIG. 2, the gas flow 212 continues to flow distally between the external surface of the electrode 202 and the internal surface of the nozzle 204 to cool both the electrode 202 and the nozzle 204. The gas flow 212 can then divide at the nozzle vent hole 231, about 70% of which forms a nozzle vent flow 226 and the remaining 30% forms a plasma chamber flow 224. The nozzle vent flow 226 can travel from an internal surface of the nozzle 204 to an external surface of the nozzle 204 at a rate of about 45 scfh (1.27 m³/h) to stabilize the plasma arc and cool the nozzle 204. The plasma chamber flow 224 can travel between an external surface of the electrode 202 and an internal surface of the nozzle 204 to reach the plasma chamber 203 and constrict the plasma arc therein. The plasma chamber flow 224 can exit the plasma chamber 203 through the nozzle exit orifice 230 at a flow rate of about 20 scfh (0.57 m³/h).

In general, the torch design 200 of FIG. 2 creates a torch configuration in which gas flows substantially in the distal direction 214 (e.g., toward the emissive element 216). In comparison to the prior art torch 100 of FIG. 1, the design of FIG. 2 uses significantly less amount of gas (e.g., compressed air) by creating multi-functional fluid flow paths throughout the torch 200. For example, the torch 200 of FIG. 2 reduces/eliminates the shield flow 120 of FIG. 1 and uses the nozzle vent flow 226 to stabilize plasma arc and cool the nozzle 204. Additionally, in FIG. 1, the internal electrode vent flow 126 of FIG. 1 is directed internally from the gas distribution holes 118 toward the proximal end 115. Instead, in the design of FIG. 2, the internal electrode cooling flow 212a is used to cool the electrode 202 via a path that is directed from the proximal region 215 toward the distal end 214. That is, the torch configurations described herein and illustrated in FIGS. 2-5, and 8 and 9 can provide for a blowback style (e.g., contact ignition) electrode in which the electrode and swirl ring combination inhibits or prevents any backward (e.g., away from the torch tip) vented gas flow. Reduction or elimination of the leaking gas flow (e.g., represented by the internal electrode vent flow 126 of FIG. 1) can lower gas consumption and improve performance including arc stability, cut speeds, and consumable cooling along with robust operation across different environmental conditions and improved robustnesses to physical damage and/or particle contamination in electrode and/or swirl ring. In general, the multi-functional fluid flow paths in the torch 200 include, but not limited to: i) the electrode cooling flow 212a, ii) the retaining cap flow 212b, the plasma chamber flow 224 and/or the iv) the nozzle vent flow 226.

The electrode 202 includes one or more sealing devices to further help reduce gas flow leakage within the torch and increase gas pressure within the plasma chamber 203. In particular, the sealing device can help reduce and/or eliminate backward (i.e., proximal) gas flow within the torch. As shown in FIG. 2, at least one circumferential sealing device 232, such as an o-ring, is disposed at the proximal end 215 of the electrode 202, at a circumferential interface 234 between an external surface of the electrode 202 and an internal surface of the swirl ring 206, to help limit gas from passing between the electrode 202 and the swirl ring 206 and flowing backward (i.e., proximally) within the torch 200. In some embodiments, at the interface 234, the sealing device 232 allows the external surface of the electrode 202 to move in the longitudinal direction in relation to the internal surface of the swirl ring 206 while providing a leak-proof seal between the two components. For example, the sealing device 232 can be dynamic and appropriately dimensioned such that it provides a certain amount of squeeze when the electrode 205 and the swirl ring 206 slide relatively to each other. In some embodiments, lubrication can be provided to the interface 234 to further prevent the electrode 205 and the swirl ring 206 from binding to each other. This dynamic freedom of movement is critical during pilot arc initiation (e.g., for a contact-start blowback torch), when sufficient pressure builds up in the plasma chamber 203 to push the electrode 202 away from the nozzle 204, at which point the electrode 202 needs to be able to move relative to the swirl ring 206 that is connected to the nozzle 204. FIG. 4 shows a more detailed view of the electrode-swirl ring interface 234 of FIG. 2, including the sealing device 232 positioned between the electrode 202 and the swirl ring 206.

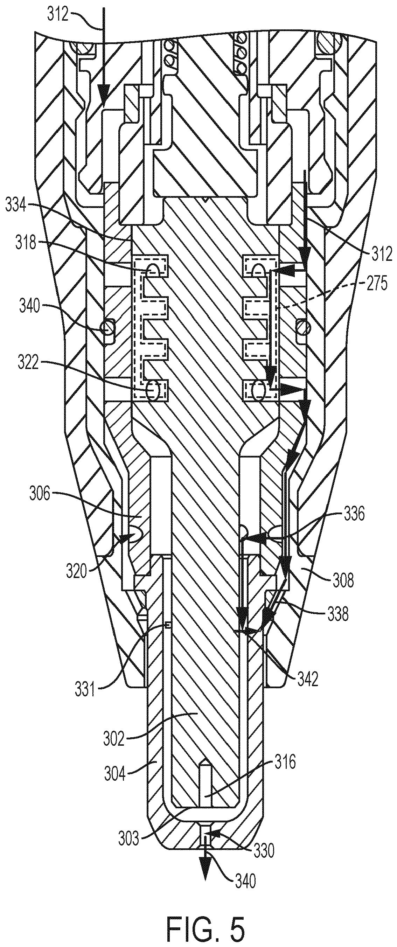

FIG. 5 shows another exemplary plasma arc torch that defines multi-function fluid flow paths therethrough. Unless otherwise described, individual features or aspects of the torch of FIG. 5 or its components can be the same or similar as those described above with respect to the torch of FIG. 2. Similarly to the torch 200 of FIG. 2, the plasma arc torch 300 of FIG. 5 can be a contact start, blowback torch configured to operate at 50 amps or less and/or greater than 25 amperes (e.g., 30 amps) at an input compressed gas flow rate of about less than about 80 scfh (2.27 m³/h) (e.g., 77 scfh (2.18 m³/h)). As shown, the plasma arc torch 300 includes an electrode 302, a plasma chamber 303, a nozzle 304, a swirl ring 306, and a retaining cap 308. The electrode 302 defines a distal end 314 configured to receive an emissive element 316 and a proximal end 315 opposite of the distal end 314. The plasma chamber 303 is defined, at least in part, by the distal end 314 of the electrode 302 and the nozzle 304, which is situated in a spaced relationship from the electrode 302. The nozzle 304 includes a nozzle exit orifice 330 and a nozzle vent hole 331. The swirl ring 306 is in fluid communication with the plasma chamber 303 and has three sets of one or more radially offset or canted gas distribution holes, including a set of one or more inlet passages 318 distributed radially around a proximal end (i.e., the end furthest away from the emissive element 316) of the swirl ring 306, a set of one or more distal swirling holes 320 distributed radially around a distal end (i.e., opposite of the proximal end) of the swirl ring 306, and a set of outlet passages 322 distributed radially around a middle section (i.e., between the proximal and distal ends) of the swirl ring 306. The retaining cap 308 is securely connected (e.g., threaded) to the nozzle 304. A flow diversion element 340 can be formed between the swirl ring 306 and the retaining cap 308 to engage an external surface of the swirl ring 206 to an internal surface of the the retaining cap 208. A shield (not shown) can be connected (e.g., threaded) to the retaining cap 308.

Similarly to the gas flow sequences described above, as a gas flow 312 can be introduced, for example during use, by a gas supply into the torch 300 through a gas inlet (not shown) at a flow rate of less than 80 scfh (2.27 m³/h) (e.g., about 77 scfh (2.18 m³/h)), the gas flow 312 travels toward the distal end 314 of the electrode 302 (i.e., downward) in a channel between an exterior surface of the swirl ring 306 and an interior surface of the retaining cap 308. Similar to FIG. 2, the gas flow 312 (i) enters the swirl ring 306 (e.g., and the cooling cavity 275) through the inlet passages 318, (ii) circulates within the cooling cavity 275 and flows downward (i.e., towards the torch tip) between an exterior surface of electrode 302 and an interior surface of the swirl ring 306, and (iii) exits the swirl ring 306 through the outlet passages 322. The gas flow 312 then flows downward between an exterior surface of the swirl ring 306 and an interior surface of the retaining cap 308 until reaching the distal swirling holes 320 of the swirl ring 306, at which point the gas flow 312 divides, a portion of which 336 enters the swirl ring 306 again through the distal swirling holes 320, while the remaining portion continues to flow downward between an external surface of the nozzle 304 and an interior surface of the retaining cap 308 to form a shield flow 338 that travels at a rate of about 31 scfh (0.88 m³/h). The gas flow 336 divides at the nozzle vent hole 331, a portion of which flows toward the plasma chamber 303 to form a plasma chamber flow 340, while the remaining portion can travel from an internal surface of the nozzle 304 to an external surface of the nozzle 304 via the nozzle vent hole 331 at a rate of about 31 scfh (0.88 m³/h) to form the nozzle vent flow 342. The plasma chamber flow 340 can exit the plasma chamber 303 through the nozzle exit orifice 330 at a flow rate of about 15 scfh (0.42 m³/h).

As shown, an additional sealing device is absent from the interface 334 between the electrode 302 and the swirl ring 306. Instead the interface 334 provides a surface seal (i.e., between the internal surface of the swirl ring 206 and the external surface of the electrode 202) to reduce gas leakage. However, in some cases, this configuration can still result in certain amount of backward leaking gas flow, such as about 7 to 8 scfh (0.2 to 0.23 m³/h) under nominal operating conditions. The extent of the leakage can vary with consumable dimensions. In addition, the extent of the leakage can increase if there is electrode sealing surface damage. For example, in the absence of a sealing device, the pressure in the plasma chamber 303 can be about 44 psi (303.37 kPa) under nominal operating conditions. After multiple uses, this pressure can drop to about 24-27 psi (165.47 - 186.16 kPa) at least in part due to wear between the electrode 302 and swirl ring 306 and/or contamination of the consumable components, which can create a gas passage at the interface 334. In general, variable amount of gas leakage puts large variations on the separation times between the electrode 302 and the nozzle 304 during pilot arc initiation, thereby making pilot arc initiation time unpredictable and sluggish in some cases, such as a delay of 750 ms between when the pilot arc initiation starts and when actual electrode-nozzle separation occurs.

In comparison, the sealing device 232 of FIG. 2 can reduce or eliminate backward leaking gas flow. The sealing device 232 can increase the pressure in the plasma chamber 203 by about 6 psi (41.37 kPa), such as from about 44 psi (303.37 kPa) to about 50 psi (344.74 kPa), thus allowing cut process performance over a wider range of compressor output. In addition, using the sealing device 232 leads to no noticeable reduction in the plasma chamber pressure after multiple uses, indicating that the design can withstand physical wear and contamination. Furthermore, the sealing device 232 makes the separation time between the electrode 202 and the nozzle 204 during pilot arc initiation predictable and quicker by as high as 50% in comparison to the design of FIG. 5. For example, the torch design of FIG. 2 can achieve a delay of at most 400 ms between when the pilot arc initiation starts and when actual electrode-nozzle separation occurs. Some of the delay is due to the operation of the compressor system that supplies the gas flow to the torch 200, where the compressor system needs time to open the appropriate valves after being turned on and build up sufficient gas pressure for supply to the torch 200. Hence, using the sealing device 232 at the interface 234 allows consumable performance of the torch 200 to be more robust, less susceptible to variations in consumable dimensions and independent of physical damages to consumables (e.g., dent to the electrode 202 or contamination on the electrode 202 and/or the swirl ring 206). Moreover, the higher pressure achieved in the plasma chamber 203 of the torch design 200 in comparison to the design 300 due to the use of the sealing device 232 can cool the torch consumables more efficiently during use, thus enabling longer consumable life.

In general, the reduced-flow torch designs 200, 300 of FIGS. 2 and 5 use incoming gas flow more efficiently in comparison to the prior art torch design 100 of FIG. 1. As explained above, the reduced-flow designs 200, 300 can reduce and/or eliminate backward vent gas flow that is used to create a pressure differential to move torch components and add extra cooling to electrode and torch body (e.g., from about 96 scfh (2.72 m³/h) for torch 100 to about 0 scfh for torch 200 or to about 7 or 8 scfh (0.2 to 0.23 m³/h) for torch 300). Additionally, the reduced-flow designs 200, 300 allow reduced gas flow through the nozzle retaining cap to cool the nozzle or to clear kerf from a workpiece (e.g., reduced from 125 scfh (3.54 m³/h) in the shield flow 120 for torch 100 to about 0 scfh for torch 200 or to about 31 scfh (0.88 m³/h) in the shield flow 338 for torch 300). As a result, the total gas needed to operate the reduced gas flow torch design 200 of FIG. 2 can be about 65 scfh (1.84 m³/h) and the total gas needed to operate the reduced gas flow torch design 300 of FIG. 5 can be about 77 scfh (2.18 m³/h), both of which are down from about 240 scfh (6.8 m³/h) in the torch design 100 illustrated in FIG. 1.

In view of the lower gas flow rate needed to operate the torch 200 of FIG. 2 or the torch 300 of FIG. 5, each torch can achieve a higher power (i.e., plasma arc torch operating power) to gas flow consumption ratio in comparison to most convention torch systems. Table 1 below illustrates estimated power-to-gas flow ratios corresponding to various conventional torch systems.

**Table 1**

| | Rated Output | | | | |
|---|---|---|---|---|---|
| System | Current (A) | Rated Output (V) | Output (kW) | Flow (cfm) | Power/Flow Ratio (kW/cfm) |
| Lincoln Tomahawk | 25 | 92 | 2.3 | 1.6 | **1.4** |
| TD Draggun | 35 | 92 | 3.2 | 2.7 | **1.2** |
| TD Aircut AC 15 | 15 | 92 | 1.4 | 1.0 | **1.4** |
| Hobart 250CI | 15 | 92 | 1.4 | 1.0 | **1.4** |
| PMX30XP | 30 | 125 | 3.8 | 4.0 | **0.9** |
| PMX45 | 45 | 132 | 5.9 | 4.5 | **1.3** |
| PMX65 | 65 | 139 | 9.0 | 6.7 | **1.4** |
| PMX85 | 85 | 143 | 12.2 | 6.7 | **1.8** |

Some conventional plasma arc systems, including the systems describe in Table 1, consume a significant amount of compressed gas flow to support both a cutting arc (e.g., typically a small percentage of the total compressed gas) and a cooling shield gas flow (e.g., typically a large percentage of the total compressed gas). Some conventional systems can require compressed gas flows to be provided at about 4 cubic feet per minute (cfm) (6.8 m³/ h) to about 9 cfm (15.3 m³/h). Such high gas requirements can be detrimental as some shop air compressors that have outputs in the 2-3 cfm (3.4 - 5.1 m³/h) range.

In contrast, the systems of the present invention, including the reduced-flow torch designs 200, 300 have high power-to-gas flow ratios of at least 2 kilowatts per cubic feet per minute (kW/cfm) (1.18 kW/m3/h). The high power-to-gas flow ratios can indicate high efficiency systems. The high power-to-gas ratios are achieved in part due to the lower flow rate of the plasma gas supplied to the torches, such as 80 scfh (2.27 m³/h) or less to sustain a 50 amp or less operation. In some embodiments, the higher efficiency systems can be configured to operate at 30 amps with a rated output of 83 volts (e.g., resulting in 2.5 kilowatts (kW)) using a compressed gas flow of about 1 cfm (1.7 m³/h). The resulting power-to-gas flow ratio is about 2.5 kW/cfm (4.24 kW/m³/h). In some embodiments, a minimum gas flow used to sustain a reasonable plasma arc in a 30-amp plasma cutter is as low as about 0.3 cfm (0.51 m³/h). Such increased power-to-gas flow ratios can result in reduced startup costs for end users (e.g., with lower-end air compressor systems).

In some embodiments, due to the lower plasma gas flow requirement, each torch system can use a smaller air compressor to provide the plasma gas to the torch system. In some embodiments, the torch systems can include built-in, portable air compressors that provide lower amounts of compressed air flow of about 1 cfm to 2 cfm (1.7 to 3.4 m³/h). Such integrated design can increase system portability and autonomy (e.g., enable the system to be powered by on-board gas source and/or battery power).

### Compact Heat Exchangers

On most plasma arc cutting systems, better cutting performance can be made possible if the compressed air delivered to the torch (e.g., the torch 200 of FIG. 2 or torch 300 of FIG. 5) as process gas is cool and dry. On plasma arc cutting systems with an 'on-board' air compressor, where the air compressor is located in the same housing as the power supply, there is an extra challenge because hot, humid air is typically supplied by the compressor. In some existing devices, an after-cooler coil (i.e., a cooled coil for delivering compressed air from a compressor to a plasma arc torch) is provided to reduce the temperature of the compressed air generated by on-board compressor. However, these devices typically rely on very weak forced convection to operate, resulting in a low heat transfer coefficient (h) of about 60 W/m^2-°C.

Disclosed is a portable plasma arc cutting system having a power supply and an air compressor integrated in a single enclosure, along with a thermal regulation system configured to regulate the temperature of the power electronics and the compressed air generated. The thermal regulation system includes an after-cooler coil that can be positioned in the enclosure between a fan typically used to cool power supply electronics (hereinafter referred to as "heat sinks") and the heat sinks such that the after-cooler coil is directly in the blast of the cooling fan. The resulting heat transfer coefficient can be about 112 W/m^2-°C. This arrangement significantly improves compressed air cooling with little additional costs to the system. Furthermore, by using the fan that cools power supply electronics to additionally cool the after-cooler coil, enhanced overall cooling capabilities can be achieved using only one fan, rather than using an additional fan dedicated to cooling only compressed air. As a result of the increased cooling, torch systems can be designed with fewer components, having a reduced package size and more effective cooling than can otherwise be achieved in the same sized package.

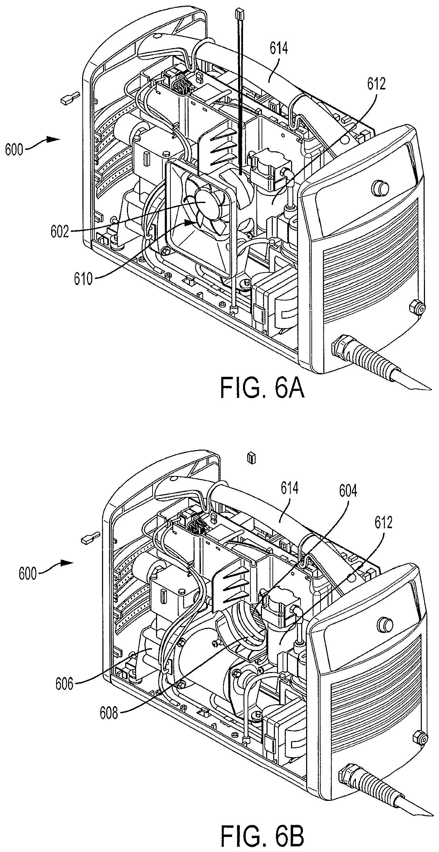

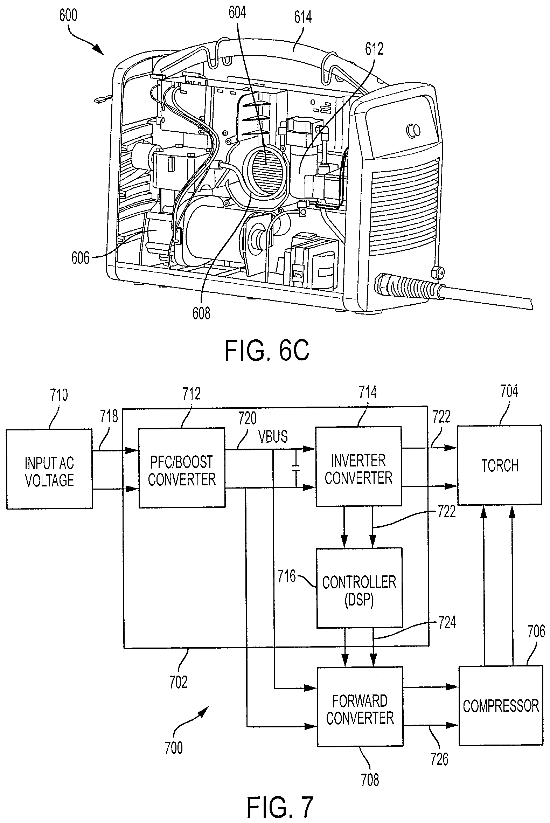

FIGS. 6A-C show various views of an exemplary enclosure that includes an on-board air compressor with power supply electronics. In some of the drawings of FIGS. 6A-C, certain components are removed to improve clarity of the illustrations. For example, a sheet metal cover for the enclosure 600 is omitted, but can be a part of the enclosure 600. As shown, the enclosure 600 can house at least one cooling fan 602, heat sinks 604, a compressor 606, and a compressor output tube 608. FIG. 6A show the enclosure 600 with the fan 602 installed therein and FIGS. 6B and 6C show the enclosure 600 with the fan 602 removed to better display the compressor output tube 608 disposed within the outlet of the fan 602. The enclosure 600 is configured such that an air flow 610 can enter the enclosure on one side and pass through to the other side, where the heat sinks 604 are located. The electronics of the power supply, represented by the heat sinks 604, can be cooled by the cooling fan 602.

The compressor output tube 608 serves as a conduit for delivering gas from the compressor 606 to a torch (not shown) coupled to the enclosure 600, where an inlet of the compressor output tube 608 is connected to the compressor 606 while an outlet of the compressor output tube 608 is connected to the torch. The compressor output tube 608 can be located between the cooling fan 602 and the heat sinks 604. As a result of the arrangement of the compressor output tube 608 within the cooling path of the fan 602, the cooling flow from the fan 602 cools both the heat sinks 604 and the compressed air in the compressor output tube 608. In some cases, after the cooling flow from the fan 602 passes over and cools the compressor output tube 608 followed by the heat sinks 604, the heat sinks 604 can redirect the air flow towards different electrical components within the enclosure 600.

In some cases, the compressor output tube 608 is located close to the fan 602 (e.g., as close to the fan 602 as possible) and directly in the high-speed output blast of the fan 602. As shown in FIGS. 6A-C, the compressor output tube 608 can be stored in the same compartment as the fan 602 and substantially surrounds the circumference of the fan 602. The compressor output tube 608 can comprise a copper tubing shaped into a coil or other convenient arrangement for purposes of cooling the compressed air flowing therein. In some cases, the coil outer diameter is approximately the diameter of the fan's annular flow area so that a substantial portion of the coil (e.g., the entire coil) can be immersed in a flow of high-velocity cooling air generated by the fan 602. In some cases, the enclosure 600 can include one or more features, such as vanes, baffles or ducts, to direct the flow of air from the fan 602 towards the compressor output tube 608 to deliver high-velocity cooling air to the exterior of the compressor output tube 608. Heat exchange can be further improved by using an extended surface (e.g., fins) on the exterior of the output tube 608 and/or a longer length tubing. These features are useful when the output tube 608 is located at a distance from the fan 602, which can provide lower velocity cooling air to the output tube 608.

The diameter and length of the compressor output tube 608 can also be adjusted (e.g., optimized) in view of the particular flow of compressed air and the particular speed of the fan blast. Optimal performance is typically achieved when the heat transfer from compressed air in the compressor output tube 608 to the internal surface of the compressor output tube 608 (e.g., a copper tube) occurs at approximately the same rate as the heat transfer from the external surface of the compressor output tube 608 to the ambient air. Consistent heat transfer rates can help to limit (e.g., prevent) excessive heat from building within the air or within the compressor output tube 608. This arrangement can also improve (e.g., maximize) cooling efficiency given a tube of fixed size, or conversely allow for a reduced (e.g., minimum) tube length given a fixed velocity of cooling air. As an example, if the compressor output tube 608 is a copper tube, the transfer of heat from the compressed air flow within the copper tube to the cooling flow outside of the copper tube can be analyzed as three steps:
1) Transfer from compressed air stream to copper tube wall controlled by hᵢ, (convection coefficient for internal transfer), with thermal resistance =1/hᵢ [°Cm²/W]
2) Conduction of heat through the wall of the copper tube controlled by k_{Cu} (coefficient of thermal conduction for copper), with thermal resistance = T/k_{Cu} [°C-m²/W] where T is the thickness of the copper tube wall.
3) Transfer from the copper tube to the external stream of cooling air controlled by hₑ, (convection coefficient for external transfer), with thermal resistance =1/hₑ [°C-m²/W]

Thus, for a copper tube with a wall thickness of .032 inch (0.81 mm) that contains a compressed air flow of 1 scfm (1.7 m³/h) at 55 psig (480.5 kPa) and 120 °C, the thermal resistance is about 2.08E-06 [°C-m²/W] (for step 2). Thermal resistance for steps 1) and 3) depend on air velocities and tube diameters. For example, a ¼" dia copper tube carrying a compressed air flow of 1 scfm (1.7 m3/h) at 55 psig (480.5 kPa) and 120°C corresponds to an internal thermal resistance of about 6.64E-03 [°C-m²/W]. Smaller diameter tubes can decrease the internal thermal resistance due to a higher Reynolds number (N_{Re}), but at the cost of higher ΔP given a fixed flow rate.

Externally, the velocity of cooling air over the compressor output tube 608 depends on the location of the cooling fan 602. If there is no fan (e.g., 'natural' convection driven only by buoyancy), air velocities created can be about 0.15 m/s. Calculations show that this condition has a thermal resistance of at least 5.87E-02 [°C-m²/W] at the exterior of a ¼" copper tube. Since forced convection generally decreases thermal resistance, a fan located at the far end of a small enclosure can create a 2 m/s flow of cooling air over the tube, which is like to result in an external thermal resistance of 1.67E-02 [°C-m²/W]. Smaller diameter tubes generally increase thermal resistance since less surface area is available for heat transfer.

Comparing the three heat transfer steps, it can be concluded that conduction through the wall of the copper tube demonstrates the lowest heat transfer resistance of all the steps by about 3 orders of magnitude. The next lowest heat transfer resistance is attributed to internal convection, i.e., the transfer of heat from the compressed air to the copper tube. The dominant factor in limiting heat removal from the compressed air is the heat transfer from the copper tube to the external cooling flow, which provides the largest heat transfer resistance by about 1 order of magnitude. Furthermore, based on comparison of 'natural' convection to low-speed forced-convection, it can be concluded that higher cooling flow speeds enhances overall heat exchange without increasing the length of the copper tube used.

Thus, by locating a helically coiled compressor output tube 608 directly in the path of the annular exhaust of a tube-axial fan 602, as illustrated in FIGS. 6A-C, the output tube 608 can be exposed to the maximum airspeed within the enclosure 600. In some cases, the coiled compressor output tube 608 is oriented on the same centerline (e.g., concentrically) as the tube-axial fan 602. In some cases, a 92 mm square fan is used that has a flow of 72 cfm (122.3 m³/h) and produces a flow velocity of 6.82 meters per second (m/s). By locating the coiled compressor output tube 608 within the fan output flow, external thermal resistance can be 8.92E-03 [°Cm²/W] if the output tube 608 is made of copper, which is about the same as the internal thermal resistance. Higher flow velocity does not typically increase overall heat exchange because internal thermal resistance can begin to dominate as long as tube diameter and compressed air flow remain fixed.

In some cases, the enclosure 600 includes at least one water-separator/air-filter device 612 configure to remove condensation and excess moisture present in the compressor output tube 608. Such moisture can be generated as a result of cooling of the compressed air by the air flow of the fan 602.

In general, the enclosure 600 includes 1) a compressor output tube 608 located within high-speed air, 2) where the output tube 608 is located between a cooling fan 602 and other heat-sinks 604 cooled by the fan 602, 3) with the fan 602 as near to the properly-sized output tube 608 as possible (e.g., the output tube 608 comprising a coil having a maximum diameter that fits within the same compartment for storing the fan 602), and/or 4) a filter-separator 612 in fluid communication with the output tube 608 to remove the condensed water from the compressed air flow.

The enclosure 600 is transportable and can be a handheld enclosure and/or a briefcase-sized enclosure. For example, the enclosure 600 can be hand-carried or otherwise transported to local and remote locations for use. A handle 614 can be attached to the enclosure 600 to facilitate transportation and/or enable an operator to carry the enclosure 600 during a plasma cutting operation. In some cases, the enclosure 600 is compact and autonomous, including (i) a power supply comprising a battery to provide torch operation without connection to an electric grid and (ii) a gas source comprising an onboard gas container or ambient air. In some cases, the enclosure 600 weighs no more than about 30 pounds (13.6 kg), which include the power supply electronics (without a battery), the air compressor and the attached plasma arc torch. In some cases, the enclosure 600 has a volume of about 1640 inch³ (26.9 dm³).

### Universal Input AC Voltage

As described above, a plasma cutting system having integrated built-in air compressor can be highly portable for various field applications. Previously, a fixed input AC voltage (e.g., 110VAC or 240VAC) is used to power the integrated system. Alternatively, the air compressor is powered by a separate power source other than the cutting system power supply. These previous systems have limitations. For example, an AC-powered compressor can limit the choice of power sources, add inconvenience to end users, and/or increase device production cost.

Disclosed is a plasma-cutting system power supply assembly to supply energy to a plasma arc torch (e.g., the reduced-flow torch of FIG. 2 or 5) and an onboard air compressor (e.g., air compressor 606 of FIGS. 6A-C). In some cases, the power supply assembly can be installed in the housing 600 of FIGS. 6A-C to power both the plasma arc torch and the air compressor.

FIG. 7 shows an exemplary design of a plasma-cutting system power supply assembly. As shown, the power supply assembly 700 includes a power supply circuit 702 for powering both a plasma arc torch 704 and an air compressor 706 via an auxiliary power converter 708. The power supply circuit 702 is connected to an input power source 710 that can provide an alternate-current (AC) input signal 718 to the power supply circuit 702, which can include a boost circuit 712, an inverter circuit 714, and a controller 716.

The boost circuit 712 can be in electrical communication with the input power source 710, the inverter circuit 714, and the auxiliary power converter 708. The boost circuit 712 can be a power factor corrected (PFC) boost converter that converts the input signal 718 from the input power source 710 to a constant, predefined direct-current (DC) output signal 720. While the voltage of the input signal 718 can vary based on the magnitude of the input power supply 710, the voltage of the output signal 720 can be maintained by the boost circuit 712 to be substantially constant at a desired power supply internal voltage (V_{BUS}) that is optimal for operating the plasma arc torch 704. For example, the input power source 710 can be a wall power that generates an AC input signal 718 ranging between 98 to 265 VAC, while the voltage of the output signal 720 can be maintained close to a V_{BUS} of about 385 VDC. The boost circuit 712 can provide the constant voltage output signal 720 to both the inverter circuit 714 to power the plasma arc torch 704 and the auxiliary power converter 708 to power one or more auxiliary components, such as the compressor 706.

The inverter circuit 714 is in electrical communication with the boost circuit 712, the controller 716 and the plasma arc torch 704. The inverter circuit 714 can modify the output signal 720 from the boost circuit 712, such as convert the output signal 720 from a DC waveform to an AC waveform, prior to providing the resulting modified signal 722 to the plasma arc torch 704 to power an operation of the torch. The inverter circuit 714 can also provide the modified signal 722 to the controller 716.

The controller 716, which can be a digital signal processor based controller, is in electrical communication with the inverter circuit 714 and the auxiliary power converter 708. The controller 716 is configured to determine an appropriate control output 724 based on the modified signal 722 supplied by the inverter circuit 714 and use the control output 724 to control the function of the auxiliary power converter 708. The controller 716 can monitor system voltage, current, and temperature signals and use the monitored values in a feedback loop to control the voltage of the output signal 720 and/or the voltage/current supplied to the torch 704 via the modified signal 722.

In addition, to the plasma arc torch 704, the output signal 720 from the boost circuit 712 can provide energy to one or more power auxiliary components, such as a compressor 706 (e.g., built into the power supply). In some cases, the compressor 706 is a compact 15V DC motor. To power the compressor 706, the output signal 720 from the boost circuit 720 can be provided to the auxiliary power converter 708 (e.g., a forward converter), which can be an auxiliary direct-current (DC) to DC converter. In operation, the auxiliary power converter 708 can convert the power supply internal voltage V_{BUS} (e.g., at 385V DC) in the output signal 720 to a compressor signal 726 with appropriate voltage to operate the compressor 706 (e.g., at 15V DC). The auxiliary power converter 708 can be controlled by the control output 724 from the controller 716 to coordinate the supply of power. For example, the controller 716 can determine and regulate the on/off state of the auxiliary power converter 708 based on system control sequence

The power supply assembly 700 of FIG. 7 thus allows the DC power source from an existing cutter power supply (e.g., a V_{BUS} output signal 720 from the boost circuit 712) that is used to power the plasma arc torch 704 to also power the compressor 706. Therefore, the power supply assembly 700 can handle voltage variations in the input power source 710 and maintain consistent voltage delivered to both the torch 704 and the compressor 706.

A substantial benefit of this design is that it creates a highly portable plasma cutting system with universal input AC voltage. Such a design also reduces (e.g., minimizes) the changes needed for use on existing cutting power supplies, which can reduce cost. Additionally, such a system can help to precisely control voltage delivered to the compressor 706 (e.g., to accommodate any of various compressors, modes, and/or conditions), essentially allowing the compressor 706 to operate independent of the AC line and giving an operator precise control of compressor operation.

Other related concepts can also help to provide consistent (e.g., universal) input voltage(s) for the compressor system. In some cases, the compressor 706 is a customized high voltage DC compressor that is directly powered by V_{BUS} of the output signal 720 (i.e., without the auxiliary power converter 708). In some cases, an auxiliary housekeeping power module (e.g., a flyback converter, etc.) of the power supply circuit 702 is modified to power the compressor 706. In some cases, separate power converters (e.g., a buck converter, etc.) with large input AC voltage range can be used to power the compressor 706.

While several aspects have been described herein to help create a more compact and efficient power supply, it is noted that specific embodiments need not incorporate all of the features or aspects described herein. That is, embodiments can include any of various combinations of one or more of the aspects, components, or features described herein.

While various embodiments have been described herein, it should be understood that they have been presented and described by way of example only. Thus, the breadth and scope of an embodiment should not be limited by any of the above-described exemplary structures or embodiments. The scope of the invention is defined by the claims.

## Claims

1. An electrode (202) for a plasma cutting system, the electrode comprising:
an arc portion (250) shaped to matingly engage a nozzle of the plasma cutting system, the arc portion having a first end (252) comprising a plasma arc emitter (216) disposed at a distal end thereof; and
a thermal portion (260) in thermal communication with a second end (254) of the arc portion (250), the thermal portion shaped to slidingly engage a complementary swirl ring (206,306) of the plasma cutting system and including:
(i) a first circumferentially formed disk-shaped flange mating feature (266) extending radially from a proximal end (264) of the thermal portion (260) of the electrode, the first circumferentially formed disk shaped flange mating feature defining a first radial width (w1) to interface with the swirl ring said first disk-shaped flange mating feature including a sealing member (232) configured to form a dynamic seal with the swirl ring so to limit a flow of a gas from a forward side to a rearward side of said first disk-shaped flange mating feature,
(ii) a second circumferentially formed disk-shaped flange mating feature (268) extending radially from a distal end (262) of the thermal portion (260) of the electrode to define a second radial width (w2) to interface with the swirl ring, and
(iii) a thermal exchange surface region (270) defined by a generally cylindrical portion of the thermal portion between the first disk-shaped flange mating feature (266) and the second disk-shaped flange mating feature (268), the thermal exchange surface region (270) defining a set of annular flanges (272) extending from the thermal portion between the first circumferentially formed disk-shaped flange mating feature (266) and the second circumferentially formed disk-shaped flange mating feature (268), the set of annular flanges having a radial width (w3) less than at least one of the first radial width (w1) and the second radial width (w2).

2. The electrode of claim 1, wherein any one or more of the following applies,
a) the sealing member is an o-ring type sealing member, wherein optionally the first disk shaped flange mating feature (266) comprises an annular recess in which the o-ring type sealing member is disposed;
b) the sealing member comprises a sealing material coating along the first disk shaped flange mating feature;
c) the set of annular flanges (272) define a set of longitudinal and/or axial flow passages between the first disk shaped flange mating feature (266), the second disk shaped flange mating feature (268), and the thermal exchange surface region (270);
d) the o-ring type sealing member is configured to form the seal between the first disk shaped flange mating feature and the swirl ring while permitting the electrode to move relative to the swirl ring; and
f) the thermal portion (260) is free of axial positioning elements that limit axial motion of the electrode relative to a plasma torch body.

3. The electrode of claim 1 wherein any one or more of the following applies,
a) the radial width (w3) of the set of annular flanges (272) is about 50% to about 85% less than the first radial width (w1);
b) at least one flange in the set of annular flanges (272) has an axial thickness that is about 5% to about 25% of an axial length of the thermal exchange surface region (270);
c) at least two annular flanges of the set of annular flanges (272) are spaced apart by a spacing that is about 5% to about 25% of an axial thickness of one of the at least two annular flanges;
d) the set of annular flanges (272) comprises three flanges arranged between the first disk shaped flange mating feature (268) and the second disk shaped flange mating feature (268);
e) at least one annular flange of the set of annular flanges (272) comprises a sharp corner edge around its outer surface;
f) the first disk shaped flange mating feature (266), the second disk shaped flange mating feature (268), and the thermal exchange surface region (270) partially define a cooling cavity;
g) the first radial width (w1) and the second radial width (w2) are substantially equal;
h) the first disk-shaped flange mating feature (266) comprises a sealing surface configured to form the dynamical seal with the swirl ring;
i) at least one of the first disk-shaped flange mating feature (266) or the second disk shaped flange mating feature (268) comprises a continuous circumferentially formed flange; and
j) the electrode forms a thermally conductive path between the thermal exchange surface region (270) of the thermal portion (260) and the plasma arc emitter of the arc portion, wherein optionally a gas flow passing between the first disk shaped flange mating surface (266) and the second disk shaped flange mating surface (268) convectively cools the thermal exchange surface region (270).

4. A method of cooling an electrode of a plasma cutting system according to any of claims 1 to 3, the method comprising:
positioning at least a portion of the electrode translatably within a complementary swirl ring (306) of the plasma cutting system;
forming an enclosed electrode cooling cavity (275) between the first flange mating feature (266) of the electrode, the second flange mating feature (268) of the electrode, the thermal exchange surface region (270) of the electrode, and an internal surface (285) of the swirl ring (306), the thermal exchange surface region being between the first flange mating feature and the second flange mating feature and defining a set of radially-extending annular flanges (272);
providing a gas flow (312) to the plasma cutting system;
directing the gas flow to a proximal region (286) of the swirl ring;
directing the gas flow from an external surface (287) at the proximal region (286) of the swirl ring into the enclosed electrode cooling cavity (275) through a set of inlet flow passages (218) formed around the proximal region (286) of the swirl ring;
circulating the gas flow along the thermal exchange surface region in the enclosed electrode cooling cavity;
expelling substantially all of the gas flow from the enclosed electrode cooling cavity to the external surface of the swirl ring through a set of outlet flow passages (222) formed around the proximal region (286) of the swirl ring; and
directing the gas flow into a plenum region defined between the electrode and a complementary nozzle.

5. The method of claim 4 wherein any one or more of the following applies,
a) the directing the gas flow into the enclosed electrode cooling cavity comprises directing the gas flow using the sealing member (232) to limit gas flow along the external surface (287) of the swirl ring, wherein optionally the using a sealing member comprises forming a circumferential seal between the swirl ring and a radially adjacent component;
b) the circulating the gas flow along the thermal exchange surface region of the electrode comprises flowing the gas flow along the set of radially-extending annular flanges (272);
c) the forming the enclosed electrode cooling cavity comprises forming the dynamic seal between the first flange mating feature (266) of the electrode and the internal surface (285) of the swirl ring (206,306).
d) the circulating the gas flow along the thermal exchange surface region of the electrode convectively cools the thermal exchange surface region, wherein optionally the convectively cooled thermal exchange surface region conductively cools an end of the electrode having a plasma arc emitter (216) via a thermally conductive path through the electrode;
e) the directing the gas flow into the plenum region comprises dividing the gas flow and directing a first portion of the gas flow into the plenum region and a second portion of the gas flow to serve as a shield gas; and
f) the method further comprising:
re-directing the gas flow into the enclosed electrode cooling cavity through a second set of inlet flow passages formed around the proximal region of the swirl ring;
circulating the gas flow along the thermal exchange surface of the electrode; and
expelling substantially all of the gas flow from the enclosed electrode cooling cavity through a second set of outlet flow passages formed around the proximal region of the swirl ring.

6. A swirl ring (206,306) complementary to the electrode of any of claims 1 to 3 comprising:
a distal section (284) shaped to receive a forward portion of the corresponding plasma arc electrode(202), the distal section including a set of fluid flow passages (220) fluidly connecting an internal surface (285) of the swirl ring with an external surface (287) of the swirl ring, the set of fluid flow passages shaped to impart a swirling flow path on a gas flow passing therethrough while conducting the gas flow radially inward from the external surface (287) to the internal surface (285) of the swirl ring; and
a proximal section (286) shaped to matingly engage a rear portion of the electrode (202), the proximal section including:
a first portion (288) defining a set of inlet flow passages (218) that provide the gas flow radially inward from the external surface of the swirl ring to the internal surface of the swirl ring; and
a second portion (290) disposed between the first portion (288) and the distal section (284) defining a set of outlet flow passages (222) that provide the gas flow radially outward from the internal surface of the swirl ring to the external surface of the swirl ring.

7. The swirl ring of claim 6 wherein any one or more of the following applies,
a) the swirl ring further comprising a flow diversion element (240) disposed along the external surface of the swirl ring, wherein
i) the flow diversion element limits the gas flow from passing along the external surface of the swirl ring beyond the first portion, or
ii) the flow diversion element comprises a sealing feature, wherein optionally in ii) the sealing feature comprises an o-ring type sealing device, and/or the flow diversion element comprises a feature extending circumferentially from the external surface of the swirl ring;
b) the swirl ring further comprising a transition section (289) between the distal section and the proximal section defining a taper, step, or flange;
c) the sets of outlet flow passages (222) and/or inlet flow passages (218) are substantially evenly distributed circumferentially around the swirl ring or circumferentially offset from one another about a longitudinal axis of the swirl ring;
d) at least a portion of the internal surface of the swirl ring is shaped and configured to slidingly interface with a mating feature of the rear portion of electrode; and
e) the swirl ring further comprising a second set of inlet passages disposed distally relative to the first set of outlet flow passages (222) and a second set of outlet passages disposed distally relative to the second set of inlet passages, wherein optionally the swirl ring further comprising a flow diversion element (240) disposed between the second set of inlet passages and the second set of outlet passages.

8. A plasma cutting torch tip comprising:
a swirl ring according to any of claims 6 and 7;
an electrode according to any of claims 1 to 3, at least a portion of which being disposed within the swirl ring.

## Patentansprüche

1. Elektrode (202) für ein Plasmaschneidsystem, wobei die Elektrode Folgendes umfasst:
einen Lichtbogenabschnitt (250), der geformt ist, um mit einer Düse des Plasmaschneidsystems passend in Eingriff zu treten, wobei der Lichtbogenabschnitt ein erstes Ende (252) aufweist, das einen Plasmalichtbogenemitter (216) umfasst, der an einem distalen Ende davon angeordnet ist; und
einen thermischen Abschnitt (260), der sich in thermischer Kommunikation mit einem zweiten Ende (254) des Lichtbogenabschnitts (250) befindet, wobei der thermische Abschnitt geformt ist, um gleitend in einen komplementären Drallring (206, 306) des Plasmaschneidsystems einzugreifen, und der Folgendes enthält:
(i) ein erstes in Umfangsrichtung gebildetes scheibenförmiges Flanschanschlussmerkmal (266), das sich von einem proximalen Ende (264) des thermischen Abschnitts (260) der Elektrode radial erstreckt, wobei das erste in Umfangsrichtung gebildete scheibenförmige Flanschanschlussmerkmal eine erste radiale Breite (w1) definiert, um mit dem Drallring des ersten scheibenförmigen Flanschanschlussmerkmals in Verbindung zu treten, das ein Dichtelement (232) enthält, das konfiguriert ist, eine dynamische Dichtung mit dem Drallring zu bilden, um so einen Strom eines Gases von einer vorderen Seite zu einer hinteren Seite des ersten scheibenförmigen Flanschanschlussmerkmals zu begrenzen,
(ii) ein zweites in Umfangsrichtung gebildetes scheibenförmiges Flanschanschlussmerkmal (268), das sich von einem distalen Ende (262) des thermischen Abschnitts (260) der Elektrode radial erstreckt, um eine zweite radiale Breite (w2) zu definieren, um mit dem Drallring in Verbindung zu treten, und
(iii)einen Wärmeaustausch-Oberflächenbereich (270), der durch einen im Allgemeinen zylindrischen Abschnitt des thermischen Abschnitts zwischen dem ersten scheibenförmigen Flanschanschlussmerkmal (266) und dem zweiten scheibenförmigen Flanschanschlussmerkmal (268) definiert ist, wobei der Wärmeaustausch-Oberflächenbereich (270) einen Satz von ringförmigen Flanschen (272) definiert, die sich von dem thermischen Abschnitt zwischen dem ersten in Umfangsrichtung gebildeten scheibenförmigen Flanschanschlussmerkmal (266) und dem zweiten in Umfangsrichtung gebildeten scheibenförmigen Flanschanschlussmerkmal (268) erstrecken, wobei der Satz von ringförmigen Flanschen eine radiale Breite (w3) aufweist, die kleiner ist als die erste radiale Breite (w1) und/oder die zweite radiale Breite (w2).

2. Elektrode nach Anspruch 1, die eines oder mehrere der folgenden Merkmale aufweist:
a) das Dichtelement ist ein Dichtelement vom O-Ring-Typ, wobei das erste scheibenförmige Flanschanschlussmerkmal (266) wahlweise eine ringförmige Vertiefung umfasst, in der das Dichtelement vom O-Ring-Typ angeordnet ist;
b) das Dichtelement umfasst eine Dichtmaterialbeschichtung entlang des ersten scheibenförmigen Flanschanschlussmerkmals;
c) der Satz von ringförmigen Flanschen (272) definiert einen Satz von in Längsrichtung laufenden und/oder axialen Strömungskanälen zwischen dem ersten scheibenförmigen Flanschanschlussmerkmal (266), dem zweiten scheibenförmigen Flanschanschlussmerkmal (268) und dem Wärmeaustausch-Oberflächenbereich (270);
d) das Dichtelement vom O-Ring-Typ ist konfiguriert, die Dichtung zwischen dem ersten scheibenförmigen Flanschanschlussmerkmal (266) und dem Drallring zu bilden, während es der Elektrode erlaubt, sich relativ zu dem Drallring zu bewegen; und
f) der thermische Abschnitt (260) weist keine axialen Positionierungselement auf, die die axiale Bewegung der Elektrode relativ zu einem Plasmabrennerkörper begrenzen.

3. Elektrode nach Anspruch 1, die eines oder mehrere der folgenden Merkmale aufweist:
a) die radiale Breite (w3) des Satzes von ringförmigen Flanschen (272) ist ungefähr 50 % bis ungefähr 85 % kleiner als die erste radiale Breite (w1);
b) mindestens ein Flansch in dem Satz von ringförmigen Flanschen (272) weist eine axiale Dicke auf, die ungefähr 5 % bis ungefähr 25 % einer axialen Länge des Wärmeaustausch-Oberflächenbereichs (270) beträgt;
c) mindestens zwei ringförmige Flansche des Satzes von ringförmigen Flanschen (272) sind um eine Teilung voneinander beabstandet, die ungefähr 5 % bis ungefähr 25 % einer axialen Dicke eines der mindestens zwei ringförmigen Flansche beträgt;
d) der Satz von ringförmigen Flanschen (272) umfasst drei Flansche, die zwischen dem ersten scheibenförmigen Flanschanschlussmerkmal (268) und dem zweiten scheibenförmigen Flanschanschlussmerkmal (268) angeordnet sind;
e) mindestens ein ringförmiger Flansch des Satzes von ringförmigen Flanschen (272) umfasst eine scharfe Eckkante um seine Außenfläche;
f) das erste scheibenförmige Flanschanschlussmerkmal (266), das zweite scheibenförmigen Flanschanschlussmerkmal (268) und der Wärmeaustausch-Oberflächenbereich (270) definieren teilweise einen Kühlhohlraum;
g) die erste radiale Breite (w1) und die zweite radiale Breite (w2) sind im Wesentlichen gleich;
h) das erste scheibenförmige Flanschanschlussmerkmal (266) umfasst eine Dichtfläche, die konfiguriert ist, die dynamische Dichtung mit dem Drallring zu bilden;
i) das erste scheibenförmige Flanschanschlussmerkmal (266) und/oder das zweite scheibenförmige Flanschanschlussmerkmal (268) umfassen einen kontinuierlichen, in Umfangsrichtung gebildeten Flansch; und
j) die Elektrode bildet einen wärmeleitenden Pfad zwischen dem Wärmeaustausch-Oberflächenbereich (270) des thermischen Abschnitts (260) und dem Plasmalichtbogenemitter des Lichtbogenabschnitts, wobei wahlweise ein Gasstrom, der zwischen der ersten scheibenförmigen Flanschanschlussfläche (266) und der zweiten scheibenförmigen Flanschanschlussfläche (268) verläuft, den Wärmeaustausch-Oberflächenbereich (270) durch Konvektion kühlt.

4. Verfahren zum Kühlen einer Elektrode eines Plasmaschneidsystems nach einem der Ansprüche 1 bis 3, wobei das Verfahren Folgendes umfasst:
verschiebbares Positionieren zumindest eines Abschnitts der Elektrode in einem komplementären Drallring (306) des Plasmaschneidsystems;
Bilden eines geschlossenen Elektrodenkühlhohlraums (275) zwischen dem ersten Flanschanschlussmerkmal (266) der Elektrode, dem zweiten Flanschanschlussmerkmal (268) der Elektrode, dem Wärmeaustausch-Oberflächenbereich (270) der Elektrode und einer Innenfläche (285) des Drallrings (306), wobei der Wärmeaustausch-Oberflächenbereich zwischen dem ersten Flanschanschlussmerkmal und dem zweiten Flanschanschlussmerkmal liegt und einen Satz von sich radial erstreckenden ringförmigen Flanschen (272) definiert;
Bereitstellen eines Gasstroms (312) zu dem Plasmaschneidsystem;
Leiten des Gasstroms zu einem proximalen Bereich (286) des Drallrings;
Leiten des Gasstroms von einer Außenfläche (287) im proximalen Bereich (286) des Drallrings in den geschlossenen Elektrodenkühlhohlraum (275) durch einen Satz von Einlassströmungskanälen (218), die um den proximalen Bereich (286) des Drallrings gebildet sind;
Zirkulieren des Gasstroms entlang des Wärmeaustausch-Oberflächenbereichs in dem geschlossenen Elektrodenkühlhohlraum;
Ausstoßen im Wesentlichen des gesamten Gasstroms aus dem geschlossenen Elektrodenkühlhohlraum auf die Außenfläche des Drallrings durch einen Satz von Auslassströmungskanälen (222), die um den proximalen Bereich (286) des Drallrings gebildet sind; und
Leiten des Gasstroms in einen Luftkammerbereich, der zwischen der Elektrode und einer komplementären Düse definiert ist.

5. Verfahren nach Anspruch 4, das eines oder mehrere der folgenden Merkmale aufweist:
a) das Leiten das Gasstroms in den geschlossenen Elektrodenkühlhohlraum umfasst das Leiten das Gasstroms unter Verwendung des Dichtelements (232), um den Gasstrom entlang der Außenfläche (287) des Drallrings zu begrenzen, wobei wahlweise das Verwenden eines Dichtelements das Bilden einer umlaufenden Dichtung zwischen dem Drallring und einer radial benachbarten Komponente umfasst;
b) das Zirkulieren des Gasstroms entlang des Wärmeaustausch-Oberflächenbereichs der Elektrode umfasst das Strömen des Gasstroms entlang des Satzes von sich radial erstreckenden ringförmigen Flanschen (272);
c) das Bilden des geschlossenen Elektrodenkühlhohlraums umfasst das Bilden der dynamischen Dichtung zwischen dem ersten Flanschanschlussmerkmal (266) der Elektrode und der Innenfläche (285) des Drallrings (206, 306);
d) das Zirkulieren des Gasstroms entlang des Wärmeaustausch-Oberflächenbereichs der Elektrode kühlt den Wärmeaustausch-Oberflächenbereich durch Konvektion, wobei wahlweise der durch Konvektion gekühlte Wärmeaustausch-Oberflächenbereich ein Ende der Elektrode, das einen Plasmalichtbogenemitter (216) umfasst, über einen wärmeleitenden Pfad durch die Elektrode leitend kühlt;
e) das Leiten des Gasstroms in den Luftkammerbereich umfasst das Aufteilen des Gasstroms und das Leiten eines ersten Teils des Gasstroms in den Luftkammerbereich und eines zweiten Teils des Gasstroms, um als Schutzgas zu dienen; und
f) wobei das Verfahren ferner Folgendes umfasst:
Umleiten des Gasstroms in den geschlossenen Elektrodenkühlhohlraum durch einen zweiten Satz von Einlassströmungskanälen, die um den proximalen Bereich des Drallrings gebildet sind;
Zirkulieren des Gasstroms entlang der Wärmeaustausch-Oberfläche der Elektrode; und
Ausstoßen im Wesentlichen des gesamten Gasstroms aus dem geschlossenen Elektrodenkühlhohlraum durch einen zweiten Satz von Auslassströmungskanälen, die um den proximalen Bereich des Drallrings gebildet sind.

6. Drallring (206, 306), der komplementär zu der Elektrode nach einem der Ansprüche 1 bis 3 ist, der Folgendes umfasst:
einen distalen Teil (284), der geformt ist, um einen vorderen Abschnitt der entsprechenden Plasmalichtbogenelektrode (202) aufzunehmen, wobei der distale Teil einen Satz von Fluidströmungskanälen (220) enthält, die eine Innenfläche (285) des Drallrings mit einer Außenfläche (287) des Drallrings fluidtechnisch verbindet, wobei der Satz von Fluidströmungskanälen geformt ist, um einem Gasstrom, der hierdurch läuft, einen Verwirbelungsströmungspfad zu verleihen, während er den Gasstrom von der Außenfläche (287) des Drallrings zu der Innenfläche (285) des Drallrings radial nach Innen führt; und
einen proximalen Teil (286), der geformt ist, um mit einem hinteren Abschnitt der Elektrode (202) passend in Eingriff zu treten, wobei der proximale Teil Folgendes enthält:
einen ersten Abschnitt (288), der einen Satz von Einlassströmungskanälen (218) definiert, die den Gasstrom von der Außenfläche des Drallrings zu der Innenfläche des Drallrings radial nach innen liefern; und
einen zweiten Abschnitt (290), der zwischen dem ersten Abschnitt (288) und dem distalen Teil (284) angeordnet ist, der einen Satz von Auslassströmungskanälen (222) definiert, die den Gasstrom von der Innenfläche des Drallrings zu der Außenfläche des Drallrings radial nach außen liefert.

7. Drallring nach Anspruch 6, der eines oder mehrere der folgenden Merkmale aufweist:
a) der Drallring umfasst ferner ein Stromumlenkelement (240), das entlang der Außenfläche des Drallrings angeordnet ist, wobei
i) das Stromumlenkelement den Gasstrom begrenzt, entlang der Außenfläche des Drallrings über den ersten Abschnitt hinaus zu laufen, oder
ii) das Stromumlenkelement ein Dichtmerkmal umfasst, wobei wahlweise in ii) das Dichtmerkmal eine Dichtvorrichtung vom O-Ring-Typ umfasst, und/oder das Stromumlenkelement ein Merkmal umfasst, das sich in Umfangsrichtung von der Außenfläche des Drallrings erstreckt;
b) der Drallring umfasst ferner einen Übergangsabschnitt (289) zwischen dem distalen Teil und dem proximalen Teil, der einen Kegel, eine Stufe oder einen Flansch definiert;
c) die Sätze von Auslassströmungskanälen (222) und/oder Einlassströmungskanälen (218) sind in Umfangsrichtung im Wesentlichen gleichmäßig um den Drallring verteilt oder sind in Umfangsrichtung um eine Längsachse des Drallrings gegeneinander versetzt;
d) mindestens ein Abschnitt der Innenfläche des Drallrings ist geformt und konfiguriert, mit einem Anschlussmerkmal des hinteren Abschnitts der Elektrode gleitend in Verbindung zu treten; und
e) der Drallring umfasst ferner einen zweiten Satz von Einlasskanälen, der distal relativ zu dem ersten Satz von Auslassströmungskanälen (222) angeordnet ist, und einen zweiten Satz von Auslasskanälen, der distal relativ zu dem zweiten Satz von Einlasskanälen angeordnet ist, wobei wahlweise der Drallring ferner ein Stromumlenkelement (240) umfasst, das zwischen dem zweiten Satz von Einlasskanälen und dem zweiten Satz von Auslasskanälen angeordnet ist.

8. Spitze eines Plasmaschneidbrenners, die Folgendes umfasst:
einen Drallring nach einem der Ansprüche 6 und 7;
eine Elektrode nach einem der Ansprüche 1 bis 3, von der zumindest ein Abschnitt in dem Drallring angeordnet ist.

## Revendications

1. Électrode (202) pour un système de découpe au plasma, l'électrode comprenant :
une partie arc (250) conformée de manière à coopérer par accouplement avec une buse du système de découpe au plasma, la partie arc étant pourvue d'une première extrémité (252) comprenant un émetteur d'arc de plasma (216) placé à son extrémité distale ; et
une partie thermique (260) en communication thermique avec une deuxième extrémité (254) de la partie arc (250), la partie thermique étant conformée de manière à coopérer par coulissement avec une bague à tourbillon complémentaire (206, 306) du système de découpe au plasma et comportant :
(i) un premier élément d'accouplement de type bride en forme de disque (266) formé circonférentiellement s'étendant radialement depuis une extrémité proximale (264) de la partie thermique (260) de l'électrode, le premier élément d'accouplement de type bride en forme de disque formé circonférentiellement définissant une première largeur radiale (w1) pour faire interface avec la bague à tourbillon, ledit premier élément d'accouplement de type bride en forme de disque comportant un organe d'étanchéité (232) configuré pour former un joint étanche dynamique avec la bague à tourbillon dans le but de limiter un écoulement d'un gaz depuis un côté avant jusqu'à un côté arrière dudit premier élément d'accouplement de type bride en forme de disque,
(ii) un deuxième élément d'accouplement de type bride en forme de disque (268) formé circonférentiellement s'étendant radialement depuis une extrémité distale (262) de la partie thermique (260) de l'électrode pour définir une deuxième largeur radiale (w2) pour faire interface avec la bague à tourbillon, et
(iii) une région de surface d'échange thermique (270) définie par une partie généralement cylindrique de la partie thermique entre le premier élément d'accouplement de type bride en forme de disque (266) et le deuxième élément d'accouplement de type bride en forme de disque (268), la région de surface d'échange thermique (270) définissant un ensemble de brides annulaires (272) s'étendant depuis la partie thermique entre le premier élément d'accouplement de type bride en forme de disque (266) formé circonférentiellement et le deuxième élément d'accouplement de type bride en forme de disque (268) formé circonférentiellement, l'ensemble de brides annulaires étant pourvu d'une largeur radiale (w3) inférieure à la première largeur radiale (w1) et/ou à la deuxième largeur radiale (w2).

2. Électrode selon la revendication 1, dans laquelle
a) l'organe d'étanchéité est un organe d'étanchéité de type joint torique, éventuellement le premier élément d'accouplement de type bride en forme de disque (266) comprenant un évidement annulaire dans lequel est placé l'organe d'étanchéité de type joint torique ; et/ou
b) l'organe d'étanchéité comprend un revêtement en matériau d'étanchéité le long du premier élément d'accouplement de type bride en forme de disque ; et/ou
c) l'ensemble de brides annulaires (272) définit un ensemble de passages d'écoulement longitudinaux et/ou axiaux entre le premier élément d'accouplement de type bride en forme de disque (266), le deuxième élément d'accouplement de type bride en forme de disque (268) et la région de surface d'échange thermique (270) ; et/ou
d) l'organe d'étanchéité de type joint torique est configuré pour former un joint étanche entre le premier élément d'accouplement de type bride en forme de disque et la bague à tourbillon tout en permettant le mouvement de l'électrode par rapport à la bague à tourbillon ; et/ou
f) la partie thermique (260) est dépourvue d'éléments de positionnement axiaux qui limitent le mouvement axial de l'électrode par rapport à un corps de torche à plasma.

3. Électrode selon la revendication 1, dans laquelle
a) la largeur radiale (w3) de l'ensemble de brides annulaires (272) est d'environ 50 % à environ 85 % inférieure à la première largeur radiale (w1) ; et/ou
b) au moins une bride dans l'ensemble de brides annulaires (272) est pourvue d'une épaisseur axiale qui représente d'environ 5 % à environ 25 % d'une longueur axiale de la région de surface d'échange thermique (270) ; et/ou
c) au moins deux brides annulaires de l'ensemble de brides annulaires (272) sont espacées d'un espacement qui représente d'environ 5 % à environ 25 % d'une épaisseur axiale d'une des au moins deux brides annulaires ; et/ou
d) l'ensemble de brides annulaires (272) comprend trois brides agencées entre le premier élément d'accouplement de type bride en forme de disque (268) et le deuxième élément d'accouplement de type bride en forme de disque (268) ; et/ou
e) au moins une bride annulaire de l'ensemble de brides annulaires (272) comprend une arête d'angle vive autour de sa surface extérieure ; et/ou
f) le premier élément d'accouplement de type bride en forme de disque (266), le deuxième élément d'accouplement de type bride en forme de disque (268) et la région de surface d'échange thermique (270) définissent partiellement une cavité de refroidissement ; et/ou
g) la première largeur radiale (w1) et la deuxième largeur radiale (w2) sont sensiblement égales ;
h) le premier élément d'accouplement de type bride en forme de disque (266) comprend une surface d'étanchéité configurée pour former le joint étanche dynamique avec la bague à tourbillon ;
i) le premier élément d'accouplement de type bride en forme de disque (266) et/ou le deuxième élément d'accouplement de type bride en forme de disque (268) comprennent/comprend une bride continue formée circonférentiellement ; et/ou
j) l'électrode forme un chemin thermiquement conducteur entre la région de surface d'échange thermique (270) de la partie thermique (260) et l'émetteur d'arc de plasma de la partie arc, éventuellement un écoulement de gaz passant entre le premier élément d'accouplement de type bride en forme de disque (266) et le deuxième élément d'accouplement de type bride en forme de disque (268) refroidissant par convection la région de surface d'échange thermique (270).

4. Procédé de refroidissement d'une électrode d'un système de découpe au plasma selon l'une quelconque des revendications 1 à 3, le procédé comprenant :
le positionnement d'au moins une partie de l'électrode en translation à l'intérieur d'une bague à tourbillon complémentaire (306) du système de découpe au plasma ;
la formation d'une cavité de refroidissement d'électrode close (275) entre le premier élément d'accouplement de type bride (266) de l'électrode, le deuxième élément d'accouplement de type bride (268) de l'électrode, la région de surface d'échange thermique (270) de l'électrode et une surface interne (285) de la bague à tourbillon (306), la région de surface d'échange thermique se situant entre le premier élément d'accouplement de type bride et le deuxième élément d'accouplement de type bride et définissant un ensemble de brides annulaires (272) s'étendant radialement ;
l'apport d'un écoulement de gaz (312) au système de découpe au plasma ;
l'acheminement de l'écoulement de gaz jusqu'à une région proximale (286) de la bague à tourbillon ;
l'acheminement de l'écoulement de gaz depuis une surface externe (287) au niveau de la région proximale (286) de la bague à tourbillon jusque dans la cavité de refroidissement d'électrode close (275) à travers un ensemble de passages d'écoulement d'entrée (218) formés autour de la région proximale (286) de la bague à tourbillon ;
la mise en circulation de l'écoulement de gaz le long de la région de surface d'échange thermique dans la cavité de refroidissement d'électrode close ;
l'expulsion de sensiblement la totalité de l'écoulement de gaz depuis la cavité de refroidissement d'électrode close jusqu'à la surface externe de la bague à tourbillon à travers un ensemble de passages d'écoulement de sortie (222) formés autour de la région proximale (286) de la bague à tourbillon ; et
l'acheminement de l'écoulement de gaz jusque dans une région de plénum définie entre l'électrode et une buse complémentaire.

5. Procédé selon la revendication 4, dans lequel
a) l'acheminement de l'écoulement de gaz jusque dans la cavité de refroidissement d'électrode close comprend l'acheminement de l'écoulement de gaz par utilisation de l'organe d'étanchéité (232) pour limiter l'écoulement de gaz le long de la surface externe (287) de la bague à tourbillon, éventuellement l'utilisation d'un organe d'étanchéité comprenant la formation d'un joint étanche circonférentiel entre la bague à tourbillon et un composant radialement adjacent ; et/ou
b) la mise en circulation de l'écoulement de gaz le long de la région de surface d'échange thermique de l'électrode comprend la mise en écoulement de l'écoulement de gaz le long de l'ensemble de brides annulaires (272) s'étendant radialement ; et/ou
c) la formation de la cavité de refroidissement d'électrode close comprend la formation du joint étanche dynamique entre le premier élément d'accouplement de type bride (266) de l'électrode et la surface interne (285) de la bague à tourbillon (206, 306) ; et/ou
d) la mise en circulation de l'écoulement de gaz le long de la région de surface d'échange thermique de l'électrode refroidit par convection la région de surface d'échange thermique, éventuellement la région de surface d'échange thermique refroidie par convection refroidissant par convection une extrémité de l'électrode pourvue d'un émetteur d'arc de plasma (216) par le biais d'un chemin thermiquement conducteur à travers l'électrode ; et/ou
e) l'acheminement de l'écoulement de gaz jusque dans la région de plénum comprend la séparation de l'écoulement de gaz et l'acheminement d'une première partie de l'écoulement de gaz jusque dans la région de plénum et d'une deuxième partie de l'écoulement de gaz servant de gaz de protection ; et/ou
f) le procédé comprend en outre :
le réacheminement de l'écoulement de gaz jusque dans la cavité de refroidissement d'électrode close à travers un deuxième ensemble de passages d'écoulement d'entrée formés autour de la région proximale de la bague à tourbillon ;
la mise en circulation de l'écoulement de gaz le long de la surface d'échange thermique de l'électrode ; et
l'expulsion de sensiblement la totalité de l'écoulement de gaz depuis la cavité de refroidissement d'électrode close à travers un deuxième ensemble de passages d'écoulement de sortie formés autour de la région proximale de la bague à tourbillon.

6. Bague à tourbillon (206, 306) complémentaire de l'électrode selon l'une quelconque des revendications 1 à 3, comprenant :
un tronçon distal (284) conformé de manière à recevoir une partie avant de l'électrode à arc de plasma (202) correspondante, le tronçon distal comportant un ensemble de passages d'écoulement de fluide (220) reliant fluidiquement une surface interne (285) de la bague à tourbillon à une surface externe (287) de la bague à tourbillon, l'ensemble de passages d'écoulement de fluide étant conformés de manière à imprimer une trajectoire d'écoulement tourbillonnaire à un écoulement de gaz les traversant tout en guidant l'écoulement de gaz radialement vers l'intérieur depuis la surface externe (287) jusqu'à la surface interne (285) de la bague à tourbillon ; et
un tronçon proximal (286) conformé de manière à coopérer par accouplement avec une partie arrière de l'électrode (202), le tronçon proximal comportant :
une première partie (288) définissant un ensemble de passages d'écoulement d'entrée (218) qui amènent l'écoulement de gaz radialement vers l'intérieur depuis la surface externe de la bague à tourbillon jusqu'à la surface interne de la bague à tourbillon ; et
une deuxième partie (290) placée entre la première partie (288) et le tronçon distal (284) définissant un ensemble de passages d'écoulement de sortie (222) qui amènent l'écoulement de gaz radialement vers l'extérieur depuis la surface interne de la bague à tourbillon jusqu'à la surface externe de la bague à tourbillon.

7. Bague à tourbillon selon la revendication 6, dans laquelle
a) la bague à tourbillon comprend en outre un élément de déviation d'écoulement (240) placé le long de la surface externe de la bague à tourbillon,
i) l'élément de déviation d'écoulement limitant le passage de l'écoulement de gaz le long de la surface externe de la bague à tourbillon au-delà de la première partie, ou
ii) l'élément de déviation d'écoulement comprenant un élément d'étanchéité, éventuellement à ii) l'élément d'étanchéité comprenant un dispositif d'étanchéité de type joint torique, et/ou l'élément de déviation d'écoulement comprenant une élément s'étendant circonférentiellement depuis la surface externe de la bague à tourbillon ; et/ou
b) la bague à tourbillon comprend en outre un tronçon de transition (289) entre le tronçon distal et le tronçon proximal définissant une conicité, un gradin ou une bride ; et/ou
c) les ensembles de passages d'écoulement de sortie (222) et/ou de passages d'écoulement d'entrée (218) sont répartis sensiblement uniformément circonférentiellement autour de la bague à tourbillon ou circonférentiellement décalés entre eux autour d'un axe longitudinal de la bague à tourbillon ; et/ou
d) au moins une partie de la surface interne de la bague à tourbillon est conformée et configurée de manière à faire interface par coulissement avec un élément d'accouplement de la partie arrière de l'électrode ; et/ou
e) la bague à tourbillon comprend en outre un deuxième ensemble de passages d'entrée placés distalement par rapport au premier ensemble de passages d'écoulement de sortie (222) et un deuxième ensemble de passages de sortie placés distalement par rapport au deuxième ensemble de passages d'entrée, éventuellement la bague à tourbillon comprenant en outre un élément de déviation d'écoulement (240) placé entre le deuxième ensemble de passages d'entrée et le deuxième ensemble de passages de sortie.

8. Embout de torche de découpe au plasma, comprenant :
une bague à tourbillon selon l'une quelconque des revendications 6 et 7 ;
une électrode selon l'une quelconque des revendications 1 à 3, dont au moins une partie est placée à l'intérieur de la bague à tourbillon.
